# EUROPEAN PATENT APPLICATION

(11) **EP 4 383 835 A1**
(43) Date of publication of application: **12.06.2024**
(21) Application number: 22863263.4
(22) Date of filing: 24.08.2022
(51) Int. Cl.: H04W 52/02

(54) **COMMUNICATION METHOD, APPARATUS, AND SYSTEM**

(30) Priority: 30.08.2021 CN 202111002503
(71) Applicant: Huawei Technologies Co., Ltd., Shenzhen, Guangdong 518129 (CN)
(72) Inventor: MA, Chuan, Shenzhen, Guangdong 518129 (CN); JIN, Yinghao, Shenzhen, Guangdong 518129 (CN)
(74) Representative: Körber, Martin Hans
(86) International application number: PCT/CN2022/114467
(87) International publication number: WO 2023/030124

(57) **Abstract**

Embodiments of the present invention disclose a communication method, apparatus, and system. The method includes: obtaining first information, where the first information includes information about a first cell; and sending the first information to a terminal device via a second cell, where the first cell is in a sleep state, the first cell corresponds to a first access network device, the second cell corresponds to a second access network device, and the information about the first cell indicates the terminal device to send a wake-up signal for waking up the first cell. In embodiments of the present invention, a wake-up delay of a sleep cell can be reduced.

## Description

This application claims priority to Chinese Patent Application No. 202111002503.9, filed with the China National Intellectual Property Administration on August 30, 2021 and entitled "COMMUNICATION METHOD, APPARATUS, AND SYSTEM", which is incorporated herein by reference in its entirety.

### TECHNICAL FIELD

The present invention relates to the field of communication technologies, and in particular, to a communication method, apparatus, and system.

### BACKGROUND

With continuous development of communication technologies, functions of an access network device are increasingly powerful. For example, a network speed is faster, and a network capacity is larger. In this case, power consumption of the access network device also increases exponentially. To resolve the foregoing problem, the access network device may enable a cell with no load or light load to enter a sleep state.

Currently, when user equipment (user equipment, UE) needs to access a cell in a sleep state, a network management device or a cell that is adjacent to the cell first needs to wake up the cell in the sleep state, to serve the UE. In this case, how to reduce a wake-up delay of the sleep cell to enable the UE to access the sleep cell more quickly to obtain a communication service is a problem of concern of a technical person.

### SUMMARY

Embodiments of the present invention disclose a communication method, apparatus, and system, to reduce a wake-up delay of a sleep cell.

According to a first aspect, a communication method is disclosed. The communication method may be applied to a second access network device, or may be applied to a module (for example, a chip) in the second access network device. An example in which the communication method is applied to the second access network device is used below for description. The communication method may include:
obtaining first information, where the first information includes information about a first cell; and
sending the first information to a terminal device via a second cell, where the first cell is in a sleep state, the first cell corresponds to a first access network device, the second cell corresponds to a second access network device, and the information about the first cell indicates the terminal device to send a wake-up signal for waking up the first cell.

In this embodiment of the present invention, after obtaining the first information including the information about the first cell, the second access network device may send the first information to the terminal device via the second cell, so that the terminal device can send the wake-up signal to the first access network device based on the information about the first cell, and the first access network device can wake up the first cell based on the wake-up signal. Therefore, the terminal device can camp on the first cell or access the first cell. It can be learned that the first cell may enter the sleep state when the first cell is in a no-load state or a light-load state. When the first cell needs to provide a service, the terminal device may wake up the first cell by using the wake-up signal. Because the access network device communicates with the terminal device through a Uu interface, and a transmission rate of the Uu interface is high, a wake-up delay of the first cell can be reduced, so that the terminal device can quickly access the sleep cell.

In a possible implementation, the sending the first information to a terminal device via a second cell includes:
determining a first sequence based on the first information; and
sending the first sequence to the terminal device via the second cell.

In this embodiment of the present invention, after obtaining the first information, the second access network device may first determine a pseudo-random sequence based on the first information, and then determine the first sequence based on the pseudo-random sequence. The second access network device may send the first sequence to the terminal device. Because the first sequence has a sharp auto-correlation characteristic and a small cross-correlation value, the terminal device may generate different sequences based on locally stored information about value sets of different content included in the first information, and then perform cross-correlation on the different sequences and the first sequence, that is, calculate a cross-correlation value between each of the different sequences and the first sequence. When the cross-correlation value is greater than a cross-correlation threshold, it indicates that the sequence is also determined based on the first information, in other words, the sequence and the first sequence include the same first information. Therefore, the terminal device can determine the first information. In addition, when the second access network device sends the first sequence to the terminal device, the second access network device does not need to send a pilot signal, to be specific, a demodulation reference signal, or the like, so that a transmission resource can be saved.

In a possible implementation, the first information further includes a receive power threshold. The receive power threshold indicates the terminal device to send the wake-up signal when a receive power of the first information is greater than or equal to the receive power threshold.

In this embodiment of the present invention, the second access network device further sends the receive power threshold to the terminal device, so that after receiving the first information, the terminal device may first determine whether the receive power of the first information is greater than or equal to the receive power threshold. When the terminal device determines that the receive power is greater than or equal to the receive power threshold, it indicates that the terminal device is in coverage of the first cell, and the terminal device may send the wake-up signal to the first access network device, to wake up the first cell. When the terminal device determines that the receive power is less than the receive power threshold, it indicates that the terminal device is outside the coverage of the first cell, and the terminal device may not send the wake-up signal to the first access network device. When the terminal device is outside the coverage of the first cell, the terminal device cannot access the first cell. Therefore, it is meaningless for the terminal device to send the wake-up signal to the first access network device. It can be learned that the terminal device sends the wake-up signal to the first access network device only when the receive power of the first information is greater than or equal to the receive power threshold, so that an amount of transmitted information can be reduced, thereby saving a transmission resource.

In a possible implementation, the first information further includes a feature parameter of the first cell, and the feature parameter is for generating the wake-up signal.

In this embodiment of the present invention, the second access network device further sends the feature parameter of the first cell to the terminal device, so that the terminal device can generate the wake-up signal based on the feature parameter of the first cell, and then send the wake-up signal, to wake up the first cell. Because different cells may correspond to different feature parameters, different wake-up signals are generated. Therefore, after receiving the wake-up signal sent by the terminal device, the first access network device may first determine whether the wake-up signal is a wake-up signal for the first cell. When the first access network device determines that the wake-up signal is the wake-up signal for the first cell, it indicates that the wake-up signal is for waking up the first cell, and the first cell may be woken up based on the wake-up signal, so that the terminal device can camp on the first cell or access the first cell. When the first access network device determines that the wake-up signal is not the wake-up signal for the first cell, it indicates that the wake-up signal is not for waking up the first cell, and the first access network device may not respond. It can be learned that the first access network device wakes up the first cell only when the received wake-up signal is the wake-up signal for the first cell, so that a case in which the first cell is woken up by using a wake-up signal for another cell can be avoided, and the cell is not unnecessarily woken up. Therefore, power consumption of the access network device can be reduced.

In a possible implementation, when the first access network device and the second access network device are a same access network device, the method further includes:
receiving the wake-up signal from the terminal device; and
waking up the first cell based on the wake-up signal.

In a possible implementation, the waking up the first cell based on the wake-up signal includes:
waking up the first cell based on the wake-up signal when a receive power of the wake-up signal is greater than or equal to a first threshold, and/or load of the second cell is greater than or equal to a second threshold.

In this embodiment of the present invention, after receiving the wake-up signal from the terminal device, the second access network device may first determine whether the receive power of the wake-up signal is greater than or equal to the first threshold, and/or whether the load of the second cell is greater than or equal to the second threshold. When the second access network device determines that the receive power of the wake-up signal is greater than or equal to the first threshold, it indicates that the terminal device is in the coverage of the first cell, and/or when the second access network device determines that the load of the second cell is greater than or equal to the second threshold, it indicates that the load of the second cell reaches an upper limit and the second cell cannot serve the terminal device. The second access network device may wake up the first cell based on the wake-up signal, so that the terminal device can camp on the first cell or access the first cell. When the second access network device determines that the receive power of the wake-up signal is less than the first threshold, it indicates that the terminal device is outside the coverage of the first cell, and the terminal device cannot access the first cell. Therefore, the first cell does not need to be woken up. When the second access network device determines that the load of the second cell is less than the second threshold, the second cell may serve the terminal device. Therefore, the first cell also does not need to be woken up. It can be learned that the second access network device wakes up the first cell only when the receive power of the wake-up signal is greater than or equal to the first threshold and/or the load of the second cell is greater than or equal to the second threshold, so that a quantity of times for which the first cell is woken up can be reduced, thereby reducing power consumption of the second access network device.

In a possible implementation, the information about the first cell is resource information, the resource information is for determining a time-frequency resource corresponding to the wake-up signal, and the time-frequency resource corresponds to the first cell.

In this embodiment of the present invention, the information that is about the first cell and that is sent by the second access network device to the terminal device may be the resource information, so that the terminal device can determine, based on the resource information, the time-frequency resource corresponding to the wake-up signal, and then send the wake-up signal to the first access network device by using the time-frequency resource. The first access network device may receive the wake-up signal on the time-frequency resource, and wake up the first cell based on the wake-up signal, so that the terminal device can camp on the first cell or access the first cell. Because a time domain resource and a frequency domain resource that are used by the terminal device to send the wake-up signal are determined, the first access network device only needs to receive the wake-up signal on the corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

In a possible implementation, the information about the first cell is an identifier of the cell, and the first cell and the second cell are adjacent cells.

In this embodiment of the present invention, the information that is about the first cell and that is sent by the second access network device to the terminal device is the identifier of the cell, so that the terminal device can determine, based on the identifier of the first cell, a time-frequency resource corresponding to the wake-up signal, and then send the wake-up signal to the first access network device by using the time-frequency resource. The first access network device may receive, on the time-frequency resource, the wake-up signal from the terminal device, and wake up the first cell based on the wake-up signal, so that the terminal device can camp on the first cell or access the first cell. Because the time-frequency resource used by the terminal device to send the wake-up signal is a specific time-frequency resource determined based on the identifier of the first cell, the first access network device only needs to receive the wake-up signal on a corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

In a possible implementation, the information about the first cell is an identifier and/or index of the cell, the first cell is a capacity-layer cell, and the second cell is a basic-layer cell.

In this embodiment of the present invention, the information that is about the first cell and that is sent by the second access network device to the terminal device may be the identifier and/or index of the cell, so that the terminal device can determine, based on the identifier and/or index of the first cell, a time-frequency resource corresponding to the wake-up signal, and then send the wake-up signal to the first access network device by using the time-frequency resource. The first access network device may receive, on the time-frequency resource, the wake-up signal from the terminal device, and wake up the first cell based on the wake-up signal, so that the terminal device can camp on the first cell or access the first cell. Because the time-frequency resource used by the terminal device to send the wake-up signal is a specific time-frequency resource determined based on the identifier and/or index of the first cell, the first access network device only needs to receive the wake-up signal on a corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

In a possible implementation, the first information further includes indication information, and the indication information indicates a cell type of the second cell.

In a possible implementation, the first information further includes resource information, and the resource information is for determining a time-frequency resource corresponding to the wake-up signal.

In this embodiment of the present invention, when the information about the first cell is not a time-frequency resource, the second access network device further sends the resource information to the terminal device, so that the terminal device can determine, based on the resource information, the time-frequency resource corresponding to the wake-up signal, and then send the wake-up signal to the first access network device by using the time-frequency resource. The first access network device may receive the wake-up signal on the time-frequency resource, and then wake up the first cell based on the wake-up signal, so that the terminal device can camp on the first cell or access the first cell. Because a time domain resource and a frequency domain resource that are used by the terminal device to send the wake-up signal are determined, the first access network device only needs to receive the wake-up signal on the corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

According to a second aspect, a communication method is disclosed. The communication method may be applied to a terminal device, or may be applied to a module (for example, a chip) in the terminal device. An example in which the communication method is applied to the terminal device is used below for description. The communication method may include:
receiving first information via a second cell, where the first information includes information about a first cell, the first cell is in a sleep state, the first cell corresponds to a first access network device, and the second cell corresponds to a second access network device; and
sending a wake-up signal to the first access network device based on the information about the first cell, where the wake-up signal is for waking up the first cell.

In this embodiment of the present invention, the terminal device receives, from the second access network device via the second cell, the first information that includes the information about the first cell, and then may send the wake-up signal to the first access network device based on the information about the first cell. The first access network device may wake up the first cell based on the wake-up signal. Therefore, the terminal device can camp on the first cell or access the first cell. It can be learned that the first cell may enter the sleep state when the first cell is in a no-load state or a light-load state. When the first cell needs to provide a service, the terminal device may wake up the first cell by using the wake-up signal. Because the access network device communicates with the terminal device through a Uu interface, and a transmission rate of the Uu interface is high, a wake-up delay of the first cell can be reduced, so that the terminal device can quickly access the sleep cell.

In a possible implementation, the receiving first information via a second cell includes:
receiving a first sequence via the second cell; and
determining the first information based on the first sequence.

In this embodiment of the present invention, after receiving the first sequence from the second access network device, the terminal device may generate different sequences based on locally stored information about value sets of different content included in the first information, and then perform cross-correlation on the different sequences and the first sequence, that is, calculate a cross-correlation value between each of the different sequences and the first sequence. When the cross-correlation value is greater than a cross-correlation threshold, it indicates that the sequence is also determined based on the first information, in other words, the sequence and the first sequence include the same first information. Therefore, the terminal device can determine the first information.

In a possible implementation, the first information further includes a receive power threshold, and the sending a wake-up signal to the first access network device based on the information about the first cell includes:
when a receive power of the first information is greater than or equal to the receive power threshold, sending the wake-up signal to the first access network device based on the information about the first cell.

In this embodiment of the present invention, after receiving the first information from the second access network device, the terminal device may first determine whether the receive power of the first information is greater than or equal to the receive power threshold. When the terminal device determines that the receive power is greater than or equal to the receive power threshold, it indicates that the terminal device is in coverage of the first cell, and the terminal device may send the wake-up signal to the first access network device, to wake up the first cell. When the terminal device determines that the receive power of the first information is less than the receive power threshold, it indicates that the terminal device is outside the coverage of the first cell, and the terminal device may not send the wake-up signal to the first access network device. When the terminal device is outside the coverage of the first cell, the terminal device cannot access the first cell. Therefore, it is meaningless for the terminal device to send the wake-up signal to the first access network device. It can be learned that the terminal device sends the wake-up signal only when the receive power of the first information is greater than or equal to the receive power threshold, so that an amount of transmitted information can be reduced, thereby saving a transmission resource.

In a possible implementation, the first information further includes a feature parameter of the first cell, and the method further includes:
generating the wake-up signal based on the feature parameter.

In this embodiment of the present invention, the terminal device may generate the wake-up signal based on the feature parameter of the first cell, and then may send the wake-up signal to the first access network device, to wake up the first cell. Because different cells may correspond to different feature parameters, different wake-up signals are generated. Therefore, after receiving the wake-up signal sent by the terminal device, the first access network device may first determine whether the wake-up signal is a wake-up signal for the first cell. When the first access network device determines that the wake-up signal is the wake-up signal for the first cell, it indicates that the wake-up signal is for waking up the first cell, and the first access network device may wake up the first cell based on the wake-up signal, so that the terminal device can camp on the first cell or access the first cell. When the first access network device determines that the wake-up signal is not the wake-up signal for the first cell, it indicates that the wake-up signal is not for waking up the first cell, and the first access network device may not respond. It can be learned that the first access network device wakes up the first cell only when the received wake-up signal is the wake-up signal for the first cell, so that a case in which the first cell is woken up by using a wake-up signal for another cell can be avoided, and the cell is not unnecessarily woken up. Therefore, power consumption of the access network device can be reduced.

In a possible implementation, the information about the first cell is resource information, and the sending a wake-up signal to the first access network device based on the information about the first cell includes:
determining a time-frequency resource based on the resource information, where the time-frequency resource corresponds to the first cell; and
sending the wake-up signal to the first access network device by using the time-frequency resource.

In this embodiment of the present invention, the terminal device may determine, based on the resource information, the time-frequency resource corresponding to the wake-up signal, and then send the wake-up signal to the first access network device by using the time-frequency resource. The first access network device may receive the wake-up signal on the time-frequency resource, and wake up the first cell based on the wake-up signal, so that the terminal device can camp on the first cell or access the first cell. Because a time domain resource and a frequency domain resource that are used by the terminal device to send the wake-up signal are determined, the first access network device only needs to receive the wake-up signal on the corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

In a possible implementation, the information about the first cell is an identifier of the cell, and the first cell and the second cell are adjacent cells.

In this embodiment of the present invention, the terminal device may determine, based on the identifier of the cell, the time-frequency resource corresponding to the wake-up signal, and then send the wake-up signal to the first access network device by using the time-frequency resource. The first access network device may receive, on the time-frequency resource, the wake-up signal from the terminal device, and wake up the first cell based on the wake-up signal, so that the terminal device can camp on the first cell or access the first cell. Because the time-frequency resource used by the terminal device to send the wake-up signal is a specific time-frequency resource determined based on the identifier of the first cell, the first access network device only needs to receive the wake-up signal on a corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

In a possible implementation, the information about the first cell is an identifier and/or index of the cell, the first cell is a capacity-layer cell, and the second cell is a basic-layer cell.

In this embodiment of the present invention, the terminal device may determine, based on the identifier and/or index of the first cell, the time-frequency resource corresponding to the wake-up signal, and then send the wake-up signal to the first access network device by using the time-frequency resource. The first access network device may receive, on the time-frequency resource, the wake-up signal from the terminal device, and wake up the first cell based on the wake-up signal, so that the terminal device can camp on the first cell or access the first cell. Because the time-frequency resource used by the terminal device to send the wake-up signal is a specific time-frequency resource determined based on the identifier and/or index of the first cell, the first access network device only needs to receive the wake-up signal on a corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

In a possible implementation, the first information further includes indication information, and the indication information indicates a cell type of the second cell.

In a possible implementation, the first information further includes the resource information, and the method further includes:
determining the time-frequency resource based on the resource information.

The sending a wake-up signal to the first access network device based on the information about the first cell includes:
sending the wake-up signal to the first access network device based on the information about the first cell by using the time-frequency resource.

In this embodiment of the present invention, the terminal device may determine, based on the resource information, the time-frequency resource corresponding to the wake-up signal, and then send the wake-up signal to the first access network device by using the time-frequency resource. The first access network device may receive the wake-up signal on the time-frequency resource, and wake up the first cell based on the wake-up signal, so that the terminal device can camp on the first cell or access the first cell. Because a time domain resource and a frequency domain resource that are used by the terminal device to send the wake-up signal are determined, the first access network device only needs to receive the wake-up signal on the corresponding time domain resource and frequency domain resource, so that duration and a bandwidth for receiving the wake-up signal by the first access network device can be reduced, thereby reducing power consumption of the first access network device. In addition, when the first cell is in the sleep state, the first access network device does not need to send a signal. Therefore, a baseband and radio frequency processing module that has high power consumption and that is of the first access network device may be disabled, and the wake-up signal may be received by using only one simple receiver module. The receiver module needs to receive only the wake-up signal. This type of receiver has a simple structure and low power consumption, so that the power consumption of the first access network device can be further reduced.

In a possible implementation, the method may further include:
receiving second information via the second cell, where the second information includes information about a third cell.

The sending a wake-up signal to the first access network device based on the information about the first cell includes:
when the receive power of the first information is greater than a receive power of the second information, sending the wake-up signal to the first access network device based on the information about the first cell.

In this embodiment of the present invention, after receiving the first information and the second information, the terminal device may learn that there are two cells in the sleep state near a current location, and may first compare the receive power of the first information and the receive power of the second information. When the terminal device determines that the receive power of the first information is greater than the receive power of the second information, it indicates that quality of communication between the terminal device and the first cell is higher than quality of communication between the terminal device and the second cell, and the terminal device may obtain a more stable and better communication service by using the first cell. Therefore, the terminal device may send the wake-up signal to the first access network device, and the first access network device may wake up the first cell based on the wake-up signal, so that the terminal device can camp on the first cell or access the first cell. It can be learned that the terminal device sends the wake-up signal to the first access network device only when the receive power of the first information is greater than the receive power of the second information, so that an amount of transmitted information can be reduced, thereby saving a transmission resource.

According to a third aspect, a communication method is disclosed. The communication method may be applied to a first access network device, or may be applied to a module (for example, a chip) in the first access network device. An example in which the communication method is applied to the first access network device is used below for description. The communication method may include:
receiving a wake-up signal from a terminal device; and
waking up a first cell based on the wake-up signal, where the first cell corresponds to a first access network device, a second cell corresponds to a second access network device, and the wake-up signal is sent based on information that is about the first cell and that is sent by the second access network device via the second cell.

In this embodiment of the present invention, after receiving the wake-up signal sent by the terminal device, the first access network device may wake up the first cell based on the wake-up signal, so that the terminal device can camp on the first cell or access the first cell. It can be learned that the first cell may enter the sleep state when the first cell is in a no-load state or a light-load state. When the first cell needs to provide a service, the terminal device may wake up the first cell by using the wake-up signal. Because the access network device communicates with the terminal device through a Uu interface, and a transmission rate of the Uu interface is high, a wake-up delay of the first cell can be reduced, so that the terminal device can quickly access the sleep cell.

In a possible implementation, the waking up a first cell based on the wake-up signal includes:
waking up the first cell based on the wake-up signal when a receive power of the wake-up signal is greater than or equal to a first threshold, and/or load of the second cell is greater than or equal to a second threshold.

In this embodiment of the present invention, after receiving the wake-up signal from the terminal device, the first access network device may first determine whether the receive power of the wake-up signal is greater than or equal to the first threshold, and/or whether the load of the second cell is greater than or equal to the second threshold. When the first access network device determines that the receive power of the wake-up signal is greater than or equal to the first threshold, it indicates that the terminal device is in coverage of the first cell, and/or when the first access network device determines that the load of the second cell is greater than or equal to the second threshold, it indicates that the load of the second cell reaches an upper limit and the second cell cannot serve the terminal device. The first access network device may wake up the first cell based on the wake-up signal, so that the terminal device can camp on the first cell or access the first cell. When the first access network device determines that the receive power of the wake-up signal is less than the first threshold, it indicates that the terminal device is outside the coverage of the first cell, and the terminal device cannot access the first cell. Therefore, the first cell does not need to be woken up. When the first access network device determines that the load of the second cell is less than the second threshold, the second cell may serve the terminal device. Therefore, the first cell also does not need to be woken up. It can be learned that the first access network device wakes up the first cell only when the receive power of the wake-up signal is greater than or equal to the first threshold and/or the load of the second cell is greater than or equal to the second threshold, so that a quantity of times for which the first cell is woken up can be reduced, thereby reducing power consumption of the first access network device.

According to a fourth aspect, a communication apparatus is disclosed. The communication apparatus may be a second access network device, or may be a module (for example, a chip) of the second access network device. The communication apparatus may include:
an obtaining unit, configured to obtain first information, where the first information includes information about a first cell; and
a sending unit, configured to send the first information to a terminal device via a second cell, where the first cell is in a sleep state, the first cell corresponds to a first access network device, the second cell corresponds to a second access network device, and the information about the first cell indicates the terminal device to send a wake-up signal for waking up the first cell.

In a possible implementation, the sending unit is specifically configured to:
determine a first sequence based on the first information; and
send the first sequence to the terminal device via the second cell.

In a possible implementation, the first information further includes a receive power threshold. The receive power threshold indicates the terminal device to send the wake-up signal when a receive power of the first information is greater than or equal to the receive power threshold.

In a possible implementation, the first information further includes a feature parameter of the first cell, and the feature parameter is for generating the wake-up signal.

In a possible implementation, when the first access network device and the second access network device are a same access network device, the communication apparatus further includes:
a receiving unit, configured to receive the wake-up signal from the terminal device; and
a wake-up unit, configured to wake up the first cell based on the wake-up signal.

In a possible implementation, the wake-up unit is specifically configured to wake up the first cell based on the wake-up signal when a receive power of the wake-up signal is greater than or equal to a first threshold, and/or load of the second cell is greater than or equal to a second threshold.

In a possible implementation, the information about the first cell is resource information, the resource information is for determining a time-frequency resource corresponding to the wake-up signal, and the time-frequency resource corresponds to the first cell.

In a possible implementation, the information about the first cell is an identifier of the cell, and the first cell and the second cell are adjacent cells.

In a possible implementation, the information about the first cell is an identifier and/or index of the cell, the first cell is a capacity-layer cell, and the second cell is a basic-layer cell.

In a possible implementation, the first information further includes indication information, and the indication information indicates a cell type of the second cell.

In a possible implementation, the first information further includes resource information, and the resource information is for determining a time-frequency resource corresponding to the wake-up signal.

According to a fifth aspect, a communication apparatus is disclosed. The communication apparatus may be a terminal device, or may be a module (for example, a chip) of the terminal device. The communication apparatus may include:
a receiving unit, configured to receive first information via a second cell, where the first information includes information about a first cell, the first cell is in a sleep state, the first cell corresponds to a first access network device, and the second cell corresponds to a second access network device; and
a sending unit, configured to send a wake-up signal to the first access network device based on the information about the first cell, where the wake-up signal is for waking up the first cell.

In a possible implementation, the receiving unit is specifically configured to:
receive a first sequence via the second cell; and
determine the first information based on the first sequence.

In a possible implementation, the first information further includes a receive power threshold. The sending unit is specifically configured to: when a receive power of the first information is greater than or equal to the receive power threshold, send the wake-up signal to the first access network device based on the information about the first cell.

In a possible implementation, the first information further includes a feature parameter of the first cell, and the apparatus further includes:
a generation unit, configured to generate the wake-up signal based on the feature parameter.

In a possible implementation, the information about the first cell is resource information. Thhe sending unit is specifically configured to send a wake-up signal to the first access network device based on the information about the first cell includes:
determining a time-frequency resource based on the resource information, where the time-frequency resource corresponds to the first cell; and
sending the wake-up signal to the first access network device.

In a possible implementation, the information about the first cell is an identifier of the cell, and the first cell and the second cell are adjacent cells.

In a possible implementation, the information about the first cell is an identifier and/or index of the cell, the first cell is a capacity-layer cell, and the second cell is a basic-layer cell.

In a possible implementation, the first information further includes indication information, and the indication information indicates a cell type of the second cell.

In a possible implementation, the first information further includes the resource information, and the communication apparatus further includes:
a determining unit, configured to determine the time-frequency resource based on the resource information.

That the sending unit sends a wake-up signal to the first access network device based on the information about the first cell includes:
sending the wake-up signal to the first access network device based on the information about the first cell by using the time-frequency resource.

In a possible implementation, the receiving unit is further configured to receive second information via the second cell, where the second information includes information about a third cell. That the sending unit sends a wake-up signal to the first access network device based on the information about the first cell includes:
when the receive power of the first information is greater than a receive power of the second information, sending the wake-up signal to the first access network device based on the information about the first cell.

According to a sixth aspect, a communication apparatus is disclosed. The communication apparatus may be a first access network device, or may be a module (for example, a chip) of the first access network device. The communication apparatus may include:
a receiving unit, configured to receive a wake-up signal from a terminal device; and
a wake-up unit, configured to wake up a first cell based on the wake-up signal, where the first cell corresponds to a first access network device, a second cell corresponds to a second access network device, and the wake-up signal is sent based on information that is about the first cell and that is sent by the second access network device via the second cell.

In a possible implementation, the wake-up unit is specifically configured to wake up the first cell based on the wake-up signal when a receive power of the wake-up signal is greater than or equal to a first threshold, and/or load of the second cell is greater than or equal to a second threshold.

According to a seventh aspect, a communication apparatus is disclosed. The communication apparatus may be a second access network device or a module (for example, a chip) in the second access network device. The communication apparatus may include a processor, a memory, and a transceiver. The transceiver is configured to receive information from a communication apparatus other than the communication apparatus, and output information to the communication apparatus other than the communication apparatus. When the processor executes a computer program stored in the memory, the processor is enabled to perform the communication method disclosed in any one of the first aspect or the implementations of the first aspect.

According to an eighth aspect, a communication apparatus is disclosed. The communication apparatus may be a terminal device or a module (for example, a chip) in the terminal device. The communication apparatus may include a processor, a memory, and a transceiver. The transceiver is configured to receive information from a communication apparatus other than the communication apparatus, and output information to the communication apparatus other than the communication apparatus. When the processor executes a computer program stored in the memory, the processor is enabled to perform the communication method disclosed in any one of the second aspect or the implementations of the second aspect.

According to a ninth aspect, a communication apparatus is disclosed. The communication apparatus may be a first access network device or a module (for example, a chip) in the first access network device. The communication apparatus may include a processor, a memory, and a transceiver. The transceiver is configured to receive information from a communication apparatus other than the communication apparatus, and output information to the communication apparatus other than the communication apparatus. When the processor executes a computer program stored in the memory, the processor is enabled to perform the communication method disclosed in any one of the third aspect or the implementations of the third aspect.

According to a tenth aspect, a communication system is disclosed. The communication system includes the communication apparatus in the seventh aspect and the communication apparatus in the eighth aspect, or includes the communication apparatus in the seventh aspect, the communication apparatus in the eighth aspect, and the communication apparatus in the ninth aspect.

According to an eleventh aspect, a computer-readable storage medium is disclosed. The computer-readable storage medium stores a computer program or computer instructions. When the computer program or the computer instructions are run, the communication methods disclosed in the foregoing aspects are implemented.

According to a twelfth aspect, a chip is disclosed. The chip includes a processor, configured to execute a program stored in a memory. When the program is executed, the chip is enabled to perform the foregoing methods.

In a possible implementation, the memory is located outside the chip.

According to a thirteenth aspect, a computer program product is disclosed. The computer program product includes computer program code, and when the computer program code is run, the foregoing communication methods are performed.

### BRIEF DESCRIPTION OF DRAWINGS

To describe the technical solutions in embodiments of the present invention more clearly, the following briefly describes the accompanying drawings used in describing embodiments. It is clear that the accompanying drawings in the following descriptions show merely some embodiments of the present invention, and a person of ordinary skill in the art may derive other drawings from these accompanying drawings without creative efforts.
FIG. 1 is a schematic diagram of a network architecture according to an embodiment of the present invention;
FIG. 2 is a schematic diagram of a single-carrier scenario according to an embodiment of the present invention;
FIG. 3 is a schematic diagram of a multi-carrier scenario according to an embodiment of the present invention;
FIG. 4 is a schematic diagram of another multi-carrier scenario according to an embodiment of the present invention;
FIG. 5 is a schematic flowchart of a communication method according to an embodiment of the present invention;
FIG. 6 is a schematic diagram of generating a DRS according to an embodiment of the present invention;
FIG. 7 is a schematic diagram of a DRS resource configuration according to an embodiment of the present invention;
FIG. 8 is a schematic diagram of another DRS resource configuration according to an embodiment of the present invention;
FIG. 9 is a schematic flowchart of another communication method according to an embodiment of the present invention;
FIG. 10 is a schematic diagram of a DRS scenario according to an embodiment of the present invention;
FIG. 11 is a schematic diagram of cell broadcast according to an embodiment of the present invention;
FIG. 12 is a schematic flowchart of still another communication method according to an embodiment of the present invention;
FIG. 13 is a schematic diagram of other cell broadcast according to an embodiment of the present invention;
FIG. 14 is a schematic flowchart of still another communication method according to an embodiment of the present invention;
FIG. 15 is a schematic diagram of still another cell broadcast according to an embodiment of the present invention;
FIG. 16 is a schematic diagram of a structure of a communication apparatus according to an embodiment of the present invention;
FIG. 17 is a schematic diagram of a structure of another communication apparatus according to an embodiment of the present invention;
FIG. 18 is a schematic diagram of a structure of still another communication apparatus according to an embodiment of the present invention;
FIG. 19 is a schematic diagram of a structure of still another communication apparatus according to an embodiment of the present invention;
FIG. 20 is a schematic diagram of a structure of still another communication apparatus according to an embodiment of the present invention;
FIG. 21 is a schematic diagram of a structure of still another communication apparatus according to an embodiment of the present invention;
FIG. 22 is a schematic diagram of a structure of still another communication apparatus according to an embodiment of the present invention;
FIG. 23 is a schematic diagram of a structure of a communication system according to an embodiment of the present invention; and
FIG. 24 is a schematic diagram of a structure of another communication system according to an embodiment of the present invention.

### DESCRIPTION OF EMBODIMENTS

Embodiments of the present invention disclose a communication method, apparatus, and system, to reduce a wake-up delay of a sleep cell. Details are separately described below.

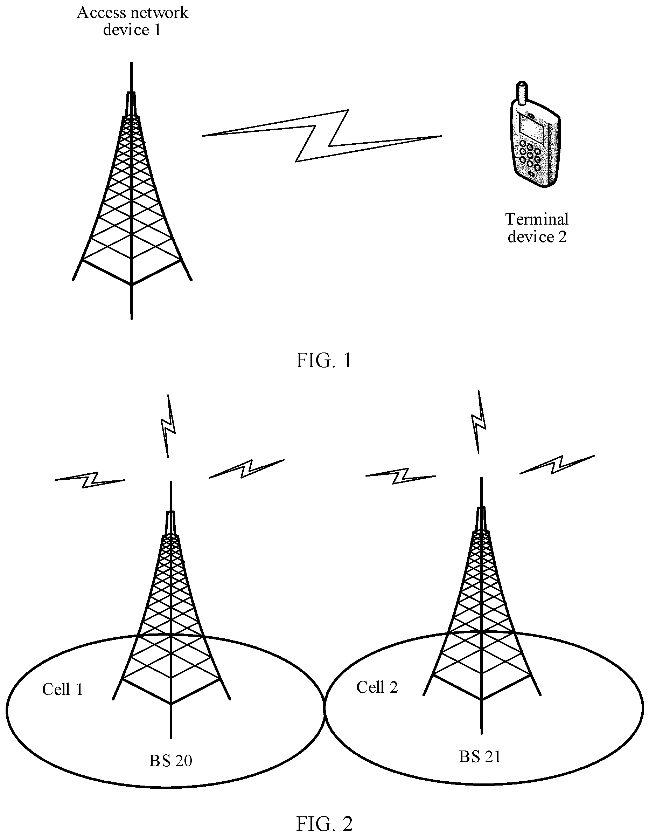

To better understand embodiments of the present invention, the following first describes a network architecture used in embodiments of the present invention. FIG. 1 is a schematic diagram of a network architecture according to an embodiment of the present invention. As shown in FIG. 1, the network architecture may include an access network device 1 and a terminal device 2. The access network device 1 may include one or more access network devices (where one access network device is shown in FIG. 1), and the terminal device 2 may include one or more terminal devices (where one terminal device is shown in FIG. 1). The access network devices may communicate with each other through an optical fiber interface. The terminal device may communicate with the access network device through a Uu interface.

It should be understood that one access network device may simultaneously send information to one or more terminal devices. A plurality of access network devices may simultaneously send information to one terminal device.

It should be noted that the network architecture shown in FIG. 1 is not limited to including only the access network device and the terminal device shown in the figure.

It should be understood that the network architecture shown in FIG. 1 is merely an example for description, and constitutes no limitation on the network architecture.

The terminal device, which may also be referred to as UE, a mobile station (mobile station, MS), a mobile terminal (mobile terminal, MT), or the like, is a device that provides voice and/or data connectivity for a user. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a wearable device (for example, a smart watch, a smart band, or a pedometer), a vehicle-mounted device (for example, an automobile, a bicycle, an electric vehicle, an airplane, a ship, a train, or a high-speed rail), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, workshop equipment, a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flying device (for example, an intelligent robot, a hot air balloon, an uncrewed aerial vehicle, or an airplane), or another device that can access a network.

The access network device may include a radio access network device. The radio access network device is an apparatus that is deployed in a radio access network and that provides a wireless communication function for the terminal device. The radio access network (radio access network, RAN) device may include base stations in various forms, for example, a macro base station, a micro base station (also referred to as a small cell), a relay station, or an access point. In systems using different radio access technologies, radio access network devices may have different names, for example, a base transceiver station (base transceiver station, BTS) in a global system for mobile communications (global system for mobile communications, GSM) or a code division multiple access (code division multiple access, CDMA) network, an NB (NodeB) in a wideband code division multiple access (wideband code division multiple access, WCDMA) network, or an eNB or eNodeB (evolved NodeB) in long term evolution (long term evolution, LTE). Alternatively, the radio access network device may be a radio controller in a cloud radio access network (cloud radio access network, CRAN) scenario. Alternatively, the radio access network device may be a base station device in a future network (such as 6G) or a radio access network device in a future evolved public land mobile network (public land mobile network, PLMN). Alternatively, the radio access network device may be a wearable device or a vehicle-mounted device. Alternatively, the radio access network device may be a transmission reception point (transmission reception point, TRP).

The following first describes conventional technologies in embodiments of the present invention, to better understand embodiments of the present invention.

In the past few decades, a wireless communication system has undergone technical evolution from first-generation analog communication to new radio (new radio, NR) of a 5th-generation mobile communication technology (5th generation, 5G). Driven by an increasingly expanding information transmission requirement, complexity of software and hardware of the wireless communication system greatly increases, and the increase in the complexity directly causes a great increase in power consumption of a terminal device. For example, a bandwidth of a 5G cell is more than five times of a bandwidth of a 4G cell. In addition, a complex massive multiple-input multiple-output (multiple-input multiple-output, MIMO) device with 64/32 channels is mainly used outdoor. As a result, power consumption of a 5G base station is extremely high. In this case, if there is no effective energy-saving technology, operation costs of an access network device increase exponentially. In view of this, energy saving has become one of important technical enhancement directions of a current NR system.

In real life, a quantity of services actually used by a user is low from 22:00 at night to 8:00 on the next day. Mobile communication network resources, including a 5G base station, are basically idle, and most power consumption of the base station is wasted. These are "invalid energy consumption". Therefore, when the base station is in a no-load state, to be specific, when the base station has no service data for transmission, a signal processing function such as transmission or reception of a radio signal may be disabled, a physical device such as a corresponding active antenna unit (active antenna unit, AAU) may be disabled, and only a basic wake-up sensing function is retained, that is, the base station enters a "sleep" state. Similarly, when the base station is in a light-load state, to be specific, when an amount of service data transmitted by the base station is very small, another base station may provide a service, and then the base station in the light-load state enters the "sleep" state. If load of a network is heavy or quality of service of the network is low, a wake-up signal (wake-up signal, WUS) may be sent to wake up the base station in the sleep state. The woken-up base station broadcasts a synchronization signal block (synchronization signal block, SSB), system information (system information, SI), and the like, to serve user equipment.

In a single-carrier scenario, when a base station or a cell is in the no-load state, the base station or the cell may be temporarily disabled, to reduce power consumption of the base station. FIG. 2 is a schematic diagram of a single-carrier scenario according to an embodiment of the present invention. As shown in FIG. 2, the scenario includes two adjacent base stations (base stations, BSs). Coverage of a base station 20 corresponds to a cell 1, and coverage of a base station 21 corresponds to a cell 2. The cell 1 and the cell 2 are adjacent cells, and are physically adjacent. The coverage of the cell 1 and the coverage of the cell 2 are related to a transmit power of corresponding access network device information. When the cell 1 is in a no-load state, the cell 1 may be disabled, so that the cell 1 enters a sleep state. In other words, the base station corresponding to the cell 1 enters the sleep state, and a radio frequency sending unit with high power consumption is disabled. Therefore, power consumption of the base station is reduced. Similarly, when the cell 2 is in the no-load state, the cell 2 may be disabled, so that the cell 2 enters the sleep state. In other words, the base station corresponding to the cell 2 enters the sleep state, and a radio frequency sending unit with high power consumption is disabled. Therefore, power consumption of the base station is reduced. When load of the cell 2 reaches an upper limit or quality of service of a network is poor, if the cell 1 is in the sleep state, the base station 21 or a network management device may wake up the cell 1, so that the cell 1 serves user equipment.

In a multi-carrier networking mode, a carrier may include a basic-layer carrier and a capacity-layer carrier. The basic-layer carrier may also be referred to as a basic component carrier (basic component carrier, BCC), and the capacity-layer carrier may also be referred to as a data component carrier (data component carrier, DCC). A cell corresponding to the BCC may be referred to as a BCC cell, and a cell corresponding to the DCC may be referred to as a DCC cell. The basic-layer carrier is for providing basic coverage of a network, and a cell covered by the basic-layer carrier may be referred to as a basic-layer cell. The capacity-layer carrier is for providing a larger network capacity, that is, more terminal devices can be accommodated based on the basic-layer cell, and a cell covered by the capacity-layer carrier may be referred to as a capacity-layer cell. When a plurality of carriers are deployed in a co-site manner, to be specific, the plurality of carriers are deployed on a same base station, if the base station is in a light-load state or a no-load state, the capacity-layer carrier may be disabled, so that the capacity-layer cell enters a sleep state, and the basic-layer carrier serves a terminal device. Therefore, power consumption of the base station is reduced. Similarly, when a plurality of carriers are deployed in a non-co-site manner, to be specific, the plurality of carriers are deployed on different base stations, if the capacity-layer cell is in the light-load state or the no-load state, the capacity-layer carrier may be disabled, so that the capacity-layer cell enters the sleep state, and the basic-layer carrier provides a service. Therefore, the power consumption of the base station is reduced.

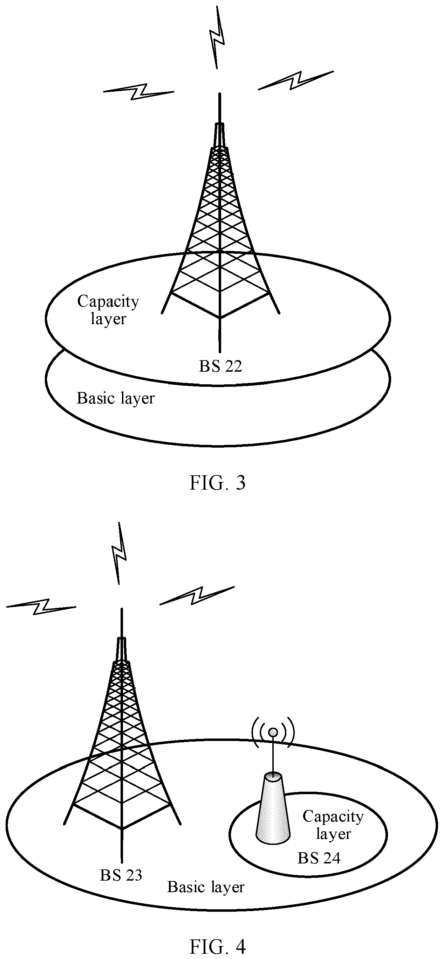

FIG. 3 is a schematic diagram of a multi-carrier scenario according to an embodiment of the present invention. As shown in FIG. 3, a base station 22 corresponds to a basic-layer cell and a capacity-layer cell. When the base station 22 is in a no-load state or a light-load state, the base station may disable the capacity-layer cell, so that the capacity-layer cell enters a sleep state, to be specific, a base station device corresponding to the capacity-layer cell enters the sleep state, and the basic-layer cell provides a service. When load of the basic-layer cell reaches an upper limit, or quality of a service provided for a user is poor, the basic-layer cell or a network management device may send a wake-up signal to wake up the capacity-layer cell. FIG. 4 is a schematic diagram of another multi-carrier scenario according to an embodiment of the present invention. As shown in FIG. 4, a base station 23 corresponds to a basic-layer cell, and a base station 24 corresponds to a capacity-layer cell. The base station 23 may be a macro base station, and the base station 24 may be a micro base station. When the capacity-layer cell corresponding to the base station 24 is in a light-load state or a no-load state, the base station may disable the capacity-layer cell, so that the capacity-layer cell enters a sleep state. In other words, the base station 24 enters the sleep state, a radio frequency sending unit or the like of the base station 24 is disabled, and the basic-layer cell provides a service. When load of the basic-layer cell reaches an upper limit, or quality of a service provided for a user is poor, the basic-layer cell or a network management device may wake up the capacity-layer cell. The woken-up capacity-layer cell may serve user equipment.

It should be understood that the scenarios shown in FIG. 2, FIG. 3, and FIG. 4 are merely examples for description, and constitute no limitation on the scenarios.

As complexity of a function of a base station increases, power consumption of the base station also increases continuously. As a result, operation costs of the base station are high. A base station sleep technology is an effective measure to resolve the foregoing problem. A cell in a light-load state or a no-load state is disabled, so that the cell enters a sleep state. Therefore, the power consumption of the base station can be greatly reduced. In this case, when load of a network reaches an upper limit or quality of service is poor, the cell in the sleep state needs to be woken up, so that the cell serves user equipment. In addition, the cell in the sleep state needs to be woken up within short duration, so that a user can quickly access the base station. Therefore, how to reduce a wake-up delay of the base station becomes an urgent problem to be resolved.

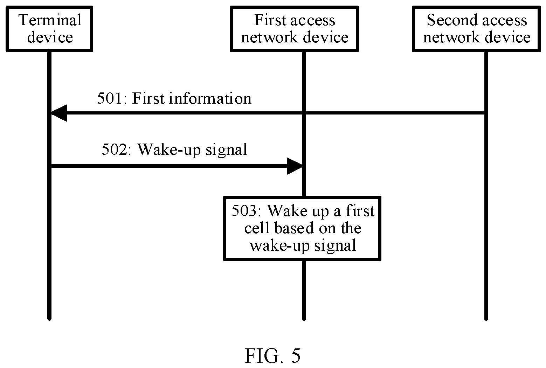

Based on the foregoing network architecture, FIG. 5 is a schematic flowchart of a communication method according to an embodiment of the present invention. As shown in FIG. 5, the communication method may include the following steps.

501: A second access network device obtains first information, and sends the first information to a terminal device via a second cell.

Correspondingly, the terminal device receives, via the second cell, the first information from the second access network device.

The first cell may enter a sleep state when the first cell is in a no-load state or a light-load state. When there is only one cell, namely, the first cell, in coverage of a first access network device, if the first cell is in the sleep state, the first access network device does not send a signal, but receives only a wake-up signal. Therefore, the first access network device may disable a baseband and radio frequency processing module with high power consumption, and retain only a function of receiving the wake-up signal, so that when the first cell needs to provide a service, the first access network device may receive the wake-up signal sent by the terminal device, and wake up the first cell based on the wake-up signal. Therefore, the terminal device can camp on the first cell or access the first cell. In addition, because the first access network device disables the baseband and radio frequency processing module with high power consumption, power consumption of the first access network device can be reduced. Similarly, when there are a plurality of cells in the coverage of the first access network device, and all the plurality of cells are in the sleep state, the first access network device may also disable the baseband and radio frequency processing module with high power consumption, and retain only the function of receiving the wake-up signal. It should be understood that, when there are a plurality of cells in the coverage of the first access network device, but there is a cell that is not in the sleep state in the plurality of cells, to ensure that the cell that is not in the sleep state can normally provide a service, the first access network device cannot disable the baseband and radio frequency processing module with high power consumption.

After the first cell is in the sleep state, the second access network device may obtain the first information.

In a single-carrier scenario, a cell in coverage of one access network device is one cell, that is, one access network device corresponds to one cell. In one case, after determining that the first cell needs to be disabled, the first access network device may send the first information to the second access network device. Correspondingly, the second access network device may receive the first information from the first access network device. In another case, after determining that the first cell needs to be disabled, the first access network device may send the first information to a network management device. After receiving the first information from the first access network device, the network management device may determine the second cell adjacent to the first cell, and then may send the first information to the second access network device corresponding to the second cell. Correspondingly, the second access network device may receive the first information from the network management device.

In a multi-carrier scenario, there are a plurality of cells in coverage of one access network device. When a plurality of carriers are deployed in a co-site manner, the first access network device corresponding to the first cell and the second access network device corresponding to the second cell are a same access network device, that is, one access network device may correspond to a plurality of cells. That the second access network device obtains the first information is that the second access network device locally obtains the first information, that is, the second access network device obtains the stored first information. When a plurality of carriers are deployed in a non-co-site manner, the first access network device corresponding to the first cell and the second access network device corresponding to the second cell are different access network devices, that is, one access network device corresponds to one cell. A manner in which the second access network device obtains the first information is the same as that in the single-carrier scenario, and details are not described herein again.

After obtaining the first information, the second access network device may send the first information to the terminal device via the second cell. Correspondingly, the terminal device may receive the first information via the second cell. In a single-carrier scenario, the second cell is a cell adjacent to the first cell, that is, coverages of the first cell and coverages of the second cell are physically adjacent. In a multi-carrier scenario, the first cell is a DCC cell, and the second cell is a BCC cell corresponding to the first cell. The BCC cell corresponding to the first cell may be understood as that coverage of the BCC cell includes coverage of the first cell, may be understood as that coverage of the first cell belongs to coverage of the BCC cell, or may be understood as that coverage of the first cell is a part of coverage of the BCC cell. The first cell corresponds to the first access network device, and the second cell corresponds to the second access network device.

The second access network device may send the first information to the terminal device in a broadcast manner. Therefore, the first information may be received by all terminal devices in the coverage of the second cell. In addition, the second access network device may properly set a transmit direction and a transmit power of the first information, so that coverage of the first information is approximately the same as coverage of a synchronization signal block in the first cell. Therefore, a terminal device in the coverage of the first cell can receive the first information, and a terminal device outside the coverage of the first cell does not receive the first information, to prevent the terminal device outside the coverage of the first cell from sending a wake-up signal for waking up the first cell. Therefore, the terminal device outside the coverage of the first cell does not wake up the first cell. It can be learned that, when receiving the first information, the terminal device may determine that a current location is in the coverage of the first cell, and may send the wake-up signal to the first access network device.

The first information may include information about the first cell. In a single-carrier scenario, the information about the first cell may be an identifier of the first cell. The identifier of the first cell may be a physical cell identifier (physical cell identifier, PCI) of the first cell, may be a cell identifier (cell identifier, CI) of the first cell, or may be other information that can uniquely identify the first cell. The PCI is mainly for distinguishing radio signals of different cells. The CI mainly forms a global cell identity (global cell identity, GCI) with a mobile country code (mobile country code, MCC), a mobile network code (mobile network code, MNC), and a location area code (location area code, LAC), and is for uniquely identifying a cell globally.

The information about the first cell may alternatively be resource information. The resource information may be a system frame number (system frame number, SFN), a half-frame indication (half-frame indication, HFI), a resource index, a discovery reference signal (discovery reference signal, DRS) index, a beam index, information about a time-frequency resource, or the like. The resource information may be for determining a time-frequency resource corresponding to the wake-up signal. The time-frequency resource corresponds to the first cell. In other words, the first access network device corresponding to the first cell receives, only on the time-frequency resource, the wake-up signal for waking up the first cell and that is from the terminal device. It can be learned that time-frequency resources used by different cells to transmit the wake-up signal may be different. That is, one-to-one correspondence may exist between a cell and a time-frequency resource. When the time-frequency resource can be determined, the corresponding cell can be determined.

In a multi-carrier scenario, the information about the first cell may be an identifier of the first cell, may be an index of the first cell, or may be an identifier and an index of the first cell. The identifier of the first cell is the same as that in the single-carrier scenario, and details are not described herein again. The index of the first cell may uniquely identify the first cell in the coverage of the second cell, and the index of the cell may be obtained by numbering a plurality of DCC cells associated with the BCC cell. The information about the first cell may alternatively be resource information. The resource information in the multi-carrier scenario is the same as the resource information in the single-carrier scenario, and details are not described herein again.

When the information about the first cell is not the time-frequency resource, the first information may further include resource information. The resource information is the same as the resource information in the single-carrier scenario, and details are not described herein again.

The first information may further include a receive power threshold. The receive power threshold may be a specific power value.

The first information may further include a feature parameter of the first cell. The feature parameter of the first cell may be a feature parameter for generating the wake-up signal for the first cell. The wake-up signal may be a pseudo-random sequence. The feature parameter may be a parameter that needs to be used to generate the pseudo-random sequence. Different types of pseudo-random sequences have different feature parameters for the pseudo-random sequences. A type of the pseudo-random sequence may be a longest linear feedback shift register sequence (which is referred to as an m sequence for short, where m represents a quantity of shift registers), a Gold sequence proposed by R.Gold, a ZC sequence proposed by Zadoff and Chu, or the like. For example, when the pseudo-random sequence is the m sequence, the feature parameter for the pseudo-random sequence may include a tap position, that is, a feedback position of a shift register.

The first information may further include an identifier of a network supported by the first cell. The identifier indicates a type of the network supported by the first cell. For example, the identifier of the network supported by the cell may be an identifier of China Unicom or an identifier of China Mobile.

The first information may further include a channel number and a bandwidth of the first cell. The channel number is for identifying a frequency, and different frequencies correspond to different channel numbers. The channel number may be a specific integer value. There is a mapping relationship between the channel number and a center frequency, that is, one channel number corresponds to one center frequency. A mapping relationship between the channel number and the center frequency is specified by default, that is, specified in a protocol. It can be learned that the center frequency of the first cell may be determined based on the channel number of the first cell. The bandwidth of the first cell may be a system bandwidth of the first cell, that is, a width of a frequency band of the first cell.

The first information may further include a priority of the first cell. The priority of the first cell may be an integer value. For example, the priority ranges from 0 to 7.

In a multi-carrier scenario, the first information may further include indication information. The indication information indicates a cell type of the second cell. The cell type of the second cell may be a BCC cell, or may be a DCC cell.

In one case, after obtaining the first information, the second access network device may directly send the first information to the terminal device. In another case, after obtaining the first information, the second access network device may first determine a pseudo-random sequence based on the first information, and then determine a first sequence based on the pseudo-random sequence. The second access network device may send the first sequence to the terminal device via the second cell. Correspondingly, the terminal device may receive, via the second cell, the first sequence from the second access network device. The second access network device may generate the pseudo-random sequence based on the first information and a feature parameter for the pseudo-random sequence, and then may use a part of the pseudo-random sequence as the first sequence. The feature parameter for the pseudo-random sequence is similar to the feature parameter of the first cell, and details are not described herein again. A value of the feature parameter for the pseudo-random sequence may be configured by a core network, may be preconfigured, or may be configured by default. When the second access network device sends the first sequence to the terminal device, the terminal device does not need a pilot signal to help demodulate data. Therefore, the second access network device does not need to send the additional pilot signal, to be specific, a demodulation reference signal (demodulation reference signal, DMRS), or the like, so that a transmission resource can be saved. In addition, the first sequence is a sequence determined based on the pseudo-random sequence, and has a sharp auto-correlation characteristic and a small cross-correlation value. Therefore, after receiving the first sequence, the terminal device may generate different sequences based on locally stored information about value sets of different content included in the first information. In other words, when values of the different content included in the first information are different combinations, the different sequences may be generated. The information about the value sets of the different content included in the first information is a set of all possible values of each content included in the first information. Then, the terminal device may perform cross-correlation on the different sequences and the first sequence, that is, calculate a cross-correlation value between each of the different sequences and the first sequence. When the cross-correlation value is greater than a cross-correlation threshold, it indicates that the sequence is also determined based on the first information, in other words, the sequence and the first sequence include the same information. Therefore, the terminal device can determine the first information based on the information for generating the sequence. The information about the value sets of the different content included in the first information is determined. For example, when the first information includes three pieces of information: a system frame number, a half-frame indication, and a physical cell identifier of the first cell, the information about the value sets of the different content may be that a value of the system frame number ranges from 0 to 1023, a value of the half-frame indication is 0 or 1, and a value of the physical cell identifier of the first cell may range from 0 to 503. Therefore, the terminal device may generate different sequences based on the information about the value sets of the different content. There may be a total of 1024 × 2 × 504 different value combinations of the system frame number, the half-frame indication, and the physical cell identifier. Therefore, 1024 × 2 × 504 different sequences may be generated, and then a cross-correlation value between each of the different sequences and the first sequence may be sequentially calculated.

The second access network device may determine an initial value or a shift value of the pseudo-random sequence based on the first information, determine the pseudo-random sequence based on the initial value or the shift value of the pseudo-random sequence, and then use a part of the pseudo-random sequence as the first sequence. The second access network device may use, as the initial value of the pseudo-random sequence, the content included in the first information. The initial value may be a bit sequence, and the different content included in the first information may occupy a same quantity of bits or different quantities of bits in the bit sequence. However, when the content is determined, the different content included in the first information occupies a fixed quantity of bits in the bit sequence. Positions occupied by the foregoing different content in the bit sequence may be configured by a core network, may be preconfigured, or may be configured by default. The foregoing pseudo-random sequence may be one pseudo-random sequence, or may include a plurality of pseudo-random sequences. Similarly, the first sequence may be one sequence, or may include a plurality of sequences. Specifically, when generating the pseudo-random sequence, the second access network device may divide the content of the first information into two or more parts, and determine, for each part, an initial value or a shift value of the pseudo-random sequence, so that different pseudo-random sequences may be generated. Then, the different pseudo-random sequences may be used as a whole.

It should be noted that the first sequence determined by the second access network device may serve as a DRS. The DRS may be a primary synchronization signal (primary synchronization signal, PSS), a secondary synchronization signal (secondary synchronization signal, SSS), a synchronization signal block (synchronization signal block, SSB), or a newly designed signal. That the DRS may be a PSS may be understood as that the DRS may replace the PSS. In other words, the DRS occupies a resource of the PSS, and replaces the PSS. In addition, the DRS includes information carried by the PSS. Similarly, the DRS may be an SSS, or may be an SSB. The DRS may include information about both an SSB and a system information block (system information block, SIB) 1. When the DRS is sent, a DMRS and the like may not need to be additionally sent. Therefore, a quantity of symbols occupied by the DRS in time domain may not be greater than a sum of a quantity of symbols occupied by the SSB and a quantity of symbols occupied by the SIB1 in time domain. In addition, because a large quantity of resource blocks on symbols occupied by the PSS and the SSS are not used, when the DRS is an SSB, a quantity of symbols occupied in time domain can be reduced, and information on a part of the symbols is placed on a symbol with a remaining resource block, so that resource block utilization in frequency domain can be improved. Therefore, the quantity of symbols occupied by the DRS in time domain may also not be greater than the sum of the quantity of symbols occupied by the SSB and the quantity of symbols occupied by the SIB1 in time domain. It can be learned that, when the sum of the quantity of symbols occupied by the DRS in time domain is less than the sum of the quantity of symbols occupied by the SSB and the quantity of symbols occupied by the SIB 1 in time domain, duration for the second access network device to send information is reduced. Therefore, power consumption of the second access network device can be reduced. In addition, the second access network device may also properly set a transmit direction and a transmit power of the DRS, so that coverage of the DRS is approximately the same as the coverage of the synchronization signal block in the first cell. Therefore, a terminal device in the coverage of the first cell can receive the DRS, and a terminal device outside the coverage of the first cell does not receive the DRS, to prevent the terminal device outside the coverage of the first cell from sending the wake-up signal for waking up the first cell. Therefore, the first cell is not unnecessarily woken up, so that the power consumption of the first access network device is reduced. It can be learned that, when the terminal device receives the DRS at the current location, it indicates that the terminal device is currently in the coverage of the first cell.

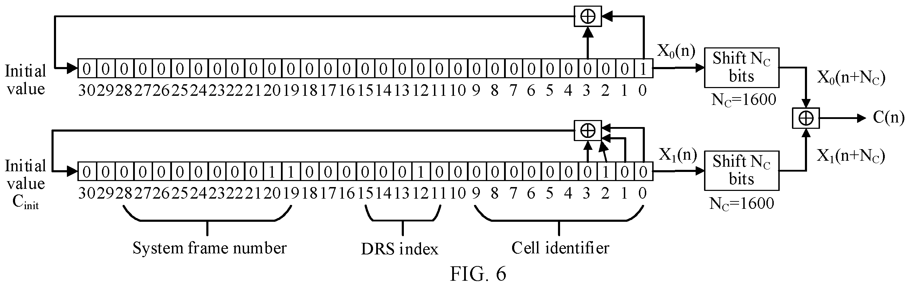

For example, FIG. 6 is a schematic diagram of generating a DRS according to an embodiment of the present invention. It is assumed that the first information includes three pieces of information: an identifier of the first cell, a DRS index, and a system frame number (system frame number, SFN). The identifier of the first cell may be a PCI or a CI of the first cell. The following describes generation of the DRS in detail. It is assumed that a 127-bit sequence is used for the DRS by default. To obtain the 127-bit sequence, modulo-2 addition may be first performed on two m sequences including 2³¹-1 bits, to obtain a Gold sequence, and then a bit 1601 to a bit 1728 of the Gold sequence are used as the DRS. As shown in FIG. 6, an initial value of a first m sequence may be 0... 0000000000000000001, and there are 31 bits in total. A bit 0 to a bit 9 of an initial value Cᵢₙᵢₜ of a second m sequence is a cell identifier 0000000011, a bit 11 to a bit 15 is a DRS index 00010, a bit 19 to a bit 28 is a system frame number 0000000100, and other bits are 0. Tap positions of the first m sequence are 0 and 3, and tap positions of the second m sequence are 0, 1, 2, and 3. *X*₀(n) and *X*₁(n) may be obtained based on the tap positions and the initial values, and a value that is first output by a shift register is before the sequences *X*₀(n) and *X*₁(n). Then, *X*₀(n) and *X*₁(n) are shifted by *N_{c}* bits, where *N_{c}* is 1600. In other words, first 1600 bits of both *X*₀(n) and *X*₁(n) are shifted, and 127 bits are selected from a bit 1601, that is, the bit 1601 to a bit 1728, to obtain *X*₀(n + *N_{c})* and *X*₁(n + *N_{c}*). Then, modulo-2 addition is performed on *X*₀(*n* + *N_{c})* and *X*₁(n + *N_{c}),* to obtain a bit 1601 to a bit 1728 of a Gold sequence obtained by performing modulo-2 addition on *X*₀(n) and *X*₁(n), so as to obtain a sequence C(n). The sequence C(n) may be used as the DRS.

The first sequence determined by the second access network device based on the first information may include a plurality of sequences. Correspondingly, the DRS may also include a plurality of signals, and these signals have the following feature: each signal is generated by using a pseudo-random sequence. For example, the plurality of sequences may be generated by using an m sequence, a Gold sequence, or a ZC sequence. Different sequences in the plurality of sequences may be generated by using a same pseudo-random sequence, or may be generated by using different pseudo-random sequences. Each of the plurality of signals may include all or a part of the first information. A sum of quantities of symbols occupied by the plurality of signals in time domain is not greater than the sum of the quantity of symbols occupied by the SSB and the quantity of symbols occupied by the SIB1 in time domain. Time-frequency resources used for the plurality of signals may be configured by a core network, may be preconfigured, or may be configured by default.

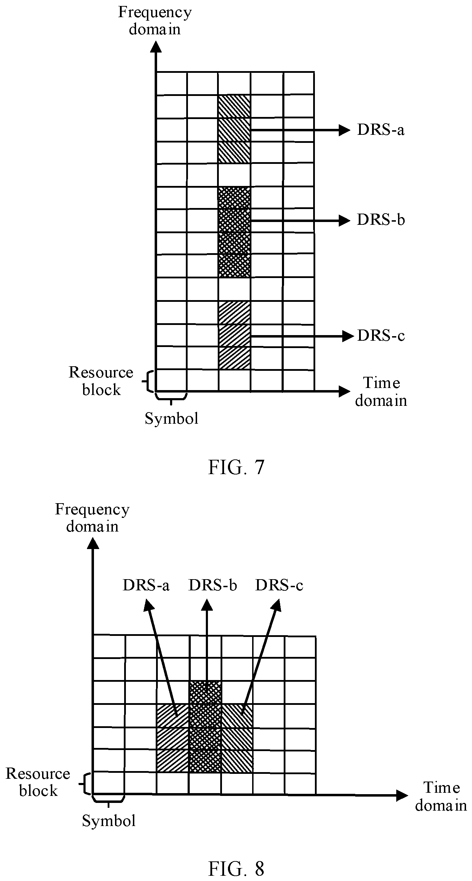

When one DRS includes a plurality of signals, time-frequency resources used for the plurality of signals are different. That time-frequency resources are different may be understood as that time domain resources are different but frequency domain resources are the same, may be understood as that time domain resource are the same but frequency domain resources are different, or may be understood as that time domain resources and frequency domain resources are all different. For example, it is assumed that the first information may include information such as a cell identifier, a DRS index, a system frame number, and a half-frame indication. The DRS may include three signals: a DRS-a, a DRS-b, and a DRS-c. The DRS-a may include the cell identifier, the DRS-b may include the DRS index, and the DRS-c may include the system frame number and the half-frame indication. For generation of the DRS-a, the DRS-b, and the DRS-c, refer to the DRS generation process shown in FIG. 6, and details are not described herein again. FIG. 7 is a schematic diagram of a DRS resource configuration according to an embodiment of the present invention. FIG. 7 shows a case in which time domain resources used for a plurality of signals are the same, but frequency domain resources used for the plurality of signals are different. As shown in FIG. 7, a DRS-a, a DRS-b, and a DRS-c occupy a same symbol in time domain, and occupy different resource blocks in frequency domain, that is, occupy different subcarriers, that is, use different frequency domain resources. A total of 10 resource blocks, that is, 120 subcarriers, are occupied. FIG. 8 is a schematic diagram of another DRS resource configuration according to an embodiment of the present invention. As shown in FIG. 8, a DRS-a, a DRS-b, and a DRS-c each occupy one symbol in time domain, that is, different time domain resources are used. Three consecutive symbols are occupied in total. In frequency domain, the DRS-a and the DRS-c occupy three same resource blocks, that is, occupy same 36 subcarriers, that is, a same frequency domain resource is used. The DRS-a and the DRS-c respectively occupy resource blocks different from that occupied by the DRS-b, that is, occupy different subcarriers, that is, use different frequency domain resources. The DRS-b occupies four resource blocks, that is, 48 subcarriers.

502: The terminal device sends the wake-up signal to the first access network device based on the information about the first cell.

Correspondingly, the first access network device may receive the wake-up signal from the terminal device.

After receiving, via the second cell, the first information from the second access network device, the terminal device may send the wake-up signal to the first access network device based on the information about the first cell. The terminal device may first generate the wake-up signal, and then send the wake-up signal to the first access network device based on the information about the first cell.

After the terminal device receives the first information from the second access network device, it indicates that there is a cell in the sleep state near a location of the terminal device. The terminal device may determine the time-frequency resource, generate the wake-up signal, and then send the wake-up signal to the first access network device by using the time-frequency resource.

The terminal device may receive the first sequence from the second access network device, and then determine the first information based on the first sequence. Because the first sequence has a sharp auto-correlation characteristic and a small cross-correlation value, after receiving the first sequence, the terminal device may generate different sequences based on locally stored information about value sets of different content included in the first information, and then perform cross-correlation on the different sequences and the first sequence, that is, calculate a cross-correlation value between each of the different sequences and the first sequence. When the cross-correlation value is greater than a cross-correlation threshold, it indicates that the sequence is also determined based on the first information, in other words, the sequence and the first sequence include the same first information. Therefore, the terminal device can determine the first information.

For example, as shown in FIG. 6, three pieces of information, namely, the cell identifier, the DRS index, and the system frame number, are "included" in the generated initial value of the pseudo-random sequence. When receiving the DRS, namely, the sequence C(n), the terminal device may determine, based on a value of a corresponding feature parameter, an initial value configuration position, the initial value of the first m sequence, and the information about the value sets of the different content included in the first information, the three pieces of information, namely, the identifier of the first cell, the DRS index, and the system frame number, included in the pseudo-random sequence, that is, the terminal device may derive the foregoing three pieces of information based on the received pseudo-random sequence. For example, assuming that the physical cell identifier included in the first information is 2, the system frame number is 100, and the half-frame indication is 0, the terminal device may calculate, when the physical cell identifier, the system frame number, and the half-frame indication value are the same, a cross-correlation value greater than the cross-correlation threshold. Therefore, the terminal device may determine that the physical cell identifier that is of the first cell and that is included in the first information is 2, the system frame number is 100, and the half-frame indication is 0.

When the first sequence is a PSS, an SSS, or an SSB corresponding to the first cell, in other words, when the DRS is the PSS, the SSS, or the SSB corresponding to the first cell, the terminal device may perform downlink synchronization with the first cell based on the DRS.

It should be noted that the terminal device needs to know a value of a feature parameter in a pseudo-random sequence generated by the second access network device, positions that are of the different content included in the first information and that are in an initial value of the pseudo-random sequence, and the information about the value sets of the different content included in the first information, so that the terminal device can determine the first information after receiving the pseudo-random sequence sent by the second access network device.

When the first sequence received by the terminal device from the second access network device includes a plurality of sequences, in other words, when the DRS includes a plurality of signals, information included in each signal may be separately determined. When a time-frequency position of each of the plurality of signals is configured by the core network, preconfigured, or configured by default, the terminal device can find another signal after finding one of the signals, to determine other corresponding information. For example, as shown in FIG. 7 and FIG. 8, the DRS includes the DRS-a, the DRS-b, and the DRS-c, and the time-frequency resources used for the DRS-a, the DRS-b, and the DRS-c may be fixed. Therefore, the terminal device may receive the DRS-a, the DRS-b, and the DRS-c on the corresponding time-frequency resources. For example, when the terminal device finds the DRS-a, the terminal device can know the time-frequency positions corresponding to the DRS-b and the DRS-c, to determine information corresponding to the DRS-b and the DRS-c.

The time-frequency resource for sending the wake-up signal may be used by two or more terminal devices to send the wake-up signal, and two or more access network devices may simultaneously receive the wake-up signal on the time-frequency resource. Therefore, when the terminal device sends the wake-up signal by using the time-frequency resource, the wake-up signal may be received by a plurality of access network devices. However, the wake-up signal may be sent to only one of the plurality of access network devices, and is for waking up a cell corresponding to the access network device. Therefore, how the access network device determines that the received wake-up signal is a wake-up signal sent to the access network device is very important. The foregoing problem may be resolved by specifying a specific wake-up signal for each cell or generating a feature parameter of the wake-up signal. Detailed descriptions are provided below.

When the first information includes the feature parameter of the first cell, the terminal device may generate the wake-up signal based on the feature parameter. The feature parameter of the first cell may be a specific feature parameter value for generating a pseudo-random sequence, and may be specifically an initial value of the pseudo-random sequence, a tap position of an m sequence, a root sequence index, or the like. When the first information does not include the feature parameter of the first cell, the terminal device may generate the wake-up signal based on a specific preamble (preamble). Cell feature parameters and specific preambles corresponding to different cells may be different, that is, there is one-to-one correspondence between a wake-up signal and a cell. When a wake-up signal can be determined, a corresponding cell can be determined. Because there are a large quantity of cells, a large quantity of cell feature parameters and a large quantity of specific preambles are required, so that each cell can be distinguished. It can be learned that, when different cells correspond to different cell feature parameters and different specific preambles, different cell feature parameters and different preambles are used for all the cells, and utilization of the cell feature parameters and the preambles is low. Therefore, another manner may be used. When a distance between two cells is small, different feature parameters or preambles may be used for the two cells, to ensure that only one cell corresponds to the wake-up signal in coverage of the wake-up signal sent by the terminal device, so that the wake-up signal sent by the terminal device does not wake up a plurality of cells. When a distance between two cells is large, that is, the distance between the two cells is greater than the coverage of the wake-up signal sent by the terminal device, the wake-up signal sent by the terminal device may be received by only an access network device corresponding to one of the cells. Therefore, a same feature parameter or preamble may be reused, thereby improving utilization. The specific preamble may be preconfigured, or may be configured by default, that is, specified in a protocol.

When the first information does not include the feature parameter of the first cell, the terminal device may alternatively generate the wake-up signal based on the identifier of the first cell or other information that can identify the first cell, or may include or carry the information about the first cell in the generated wake-up signal. It can be learned that the wake-up signal generated by the terminal device in the foregoing several manners may be dedicated to waking up the first cell.

In a single-carrier scenario, when the information about the first cell is the identifier of the cell, the terminal device may determine the time-frequency resource based on the identifier of the first cell. In one case, there is a mapping relationship between the identifier of the first cell and the time-frequency resource. For example, when a physical cell identifier is 5, a corresponding time-frequency resource is the 2^{nd} symbol to the 4^{th} symbol after a DRS in time domain, and the time-frequency resource occupies a resource block the same as that occupied by the DRS. When a physical cell identifier is 6, a corresponding time-frequency resource is the 3^{rd} symbol to the 5^{th} symbol after a DRS in time domain, and the time-frequency resource occupies a resource block the same as that occupied by the DRS. In another case, the time-frequency resource may be determined based on a value obtained by performing a modulo operation on a specific value based on the identifier of the cell. For example, the specific value may be 16. When the identifier of the cell is 17, a value obtained by performing the modulo operation is 1. A time-frequency resource corresponding to the value 1 may be the 2^{nd} symbol to the 4^{th} symbol after a DRS in time domain, and the time-frequency resource occupies a resource block the same as that occupied by the DRS. For another example, the specific value may be 16. When the physical cell identifier is 18, an obtained value is 2. A time-frequency resource corresponding to the value 2 is the 3^{rd} symbol to the 5^{th} symbol after a DRS in time domain, and the time-frequency resource occupies a resource block the same as that occupied by the DRS. It should be understood that the identifier of the first cell may alternatively be obtained by performing the modulo operation on 32, 64, or the like. The mapping relationship between the identifier of the cell and the time-frequency resource may be configured by a core network, may be preconfigured, or may be configured by default. Because the time-frequency resource is a time-frequency resource corresponding to the first cell, and may be dedicated to sending, to the first access network device, the wake-up signal for waking up the first cell, interference between wake-up signals for different cells can be avoided.

In a single-carrier scenario, when the information about the first cell is the resource information, the terminal device may determine the time-frequency resource based on the resource information. When the resource information is information about the time-frequency resource, that is, a determined specific time-frequency resource, the terminal device may directly send the wake-up signal to the first access network device by using the time-frequency resource. When the resource information is a system frame number and a half-frame indication, the terminal device may determine, based on the system frame number and the half-frame indication, the time-frequency resource for sending the wake-up signal. For example, it is assumed that a value of the half-frame indication includes 0 and 1, where the value 0 represents a first half-frame of a frame, and the value 1 represents a second half-frame of the frame. Therefore, when the system frame number is 5 and the half-frame indication is 0, it indicates that the terminal device may send the wake-up signal in a first half-frame of the 5^{th} frame in a system. When the resource information is a DRS index or a beam index, the terminal device may determine, based on the DRS index or the beam index, a beam corresponding to the time-frequency resource on which the wake-up signal is sent. For example, the first access network device uses 64 beams, and a range of the DRS index or the beam index is 0 to 63. When the DRS index or the beam index is 5, the terminal device needs to send the wake-up signal on a time-frequency resource of a corresponding beam. When the resource information is a resource index, the resource information may be an index value. There is a mapping relationship between the index value and a time-frequency resource. One index value corresponds to one determined time-frequency resource by default. Therefore, the terminal device may determine, based on the resource index, the time-frequency resource for sending the wake-up signal. For example, a value range of the index value is 1 to 64. When the index value is 1, a corresponding time-frequency resource is the 2^{nd} symbol to the 4^{th} symbol after the DRS in time domain, and the time-frequency resource occupies a resource block the same as that occupied by the DRS. When the index value is 2, a corresponding time-frequency resource is the 3^{rd} symbol to the 5^{th} symbol after a DRS in time domain, and the time-frequency resource occupies a resource block the same as that occupied by the DRS. It can be learned that, in a specific area range, where the specific area range may be a range that can be covered by the wake-up signal sent by the terminal device, the time-frequency resource determined by the terminal device based on the resource information may be dedicated to sending, to the first access network device, the wake-up signal for waking up the first cell, so that the wake-up signal sent by the terminal device is not received by another access network device. Therefore, when there are a plurality of cells in the sleep state at the current location of the terminal device, an access network device corresponding to another sleep cell receives a wake-up signal on a different time-frequency resource. Therefore, the wake-up signal sent by the terminal device is received by only the first access network device, and is for waking up the first cell, so that the another cell in the sleep state is not mistakenly woken up, and power consumption can be reduced.

In a multi-carrier scenario, when the information about the first cell is the identifier and/or the index of the cell, the terminal device may determine the time-frequency resource based on the identifier and/or the index of the cell. When the information about the first cell is the identifier of the cell, a manner in which the terminal device determines the time-frequency resource is the same as that in the single-carrier scenario, and details are not described herein again. When the information about the first cell is the index of the cell, there is a mapping relationship between the index of the first cell and the time-frequency resource. For example, when a BCC cell is associated with N DCC cells, an index of a cell is for numbering the plurality of DCC cells associated with the BCC cell. Therefore, the DCC cells may be numbered from 0 to N-1. Amanner in which the terminal device determines the time-frequency resource based on the index of the cell is similar to the manner in which the terminal device determines the time-frequency resource based on the identifier of the cell, and details are not described herein again. When the information about the first cell is the identifier and the index of the cell, the terminal device needs to determine the time-frequency resource based on both the identifier and the index of the first cell. For example, the terminal device may determine a time domain resource based on the identifier of the cell, and determine a frequency domain resource based on the index of the cell, to determine the time-frequency resource for sending the wake-up signal. The mapping relationship between the index of the cell and the time-frequency resource may be configured by a core network, may be preconfigured, or may be configured by default.

In a multi-carrier scenario, when the information about the first cell is the resource information, the terminal device may determine the time-frequency resource based on the resource information. A manner in which the terminal device determines the time-frequency resource based on the resource information is the same as that in the single-carrier scenario, and details are not described herein again.

When the information about the first cell is the identifier of the cell and/or the index of the cell, the identifier or the index of the first cell may have only an identifying function, that is, notify the terminal device that there is a cell in the sleep state near the current location. Therefore, there is no mapping relationship between the identifier or the index of the first cell and the time-frequency resource. In one case, the first information may further include the resource information. When the first information further includes the resource information, the terminal device may determine the time-frequency resource based on the resource information. A manner in which the terminal device determines the time-frequency resource based on the resource information is the same as that in the single-carrier scenario, and details are not described herein again. In another case, the time-frequency resource corresponding to the wake-up signal may be a default time-frequency resource. The terminal device may directly send the wake-up signal to the first access network device by using the default time-frequency resource. For example, it is specified by default that the time-frequency resource for sending the wake-up signal is the 2^{nd} symbol to the 4^{th} symbol after a DRS in time domain, and the time-frequency resource occupies a resource block the same as that occupied by the DRS. It should be understood that the default time-frequency resource may be used by two or more terminal devices to send wake-up signals to access network devices, or may be used by one terminal device to send a wake-up signal to two or more access network devices.

When the first information includes an identifier of a network supported by the first cell, after receiving the first information, the terminal device may first determine, based on the identifier of the network supported by the first cell, whether the first cell supports a network of the terminal device. When determining that the network of the terminal device is the network supported by the first cell, the terminal device may send the wake-up signal to the first access network device. Because the terminal device can obtain a service by using only a cell that supports the network of the terminal device, the terminal device does not send the wake-up signal when determining that the network of the terminal device is not the network supported by the first cell. It can be learned that the terminal device sends the wake-up signal only when the first cell can support the network of the terminal device, so that an amount of transmitted information can be reduced, thereby saving a transmission resource. It should be understood that the first cell may support a plurality of types of networks, or may support only one type of network.

When the first information includes the receive power threshold, after receiving the first information, the terminal device may first determine a receive power of the first information, and then determine whether the receive power of the first information is greater than or equal to the receive power threshold. When determining that the receive power of the first information is greater than or equal to the receive power threshold, it indicates that the terminal device is in the coverage of the first cell, and the terminal device may send the wake-up signal to the first access network device based on the information about the first cell. When the terminal device is outside the coverage of the first cell, the terminal device cannot access the first cell. Therefore, when it is determined that the receive power of the first information is less than the receive power threshold, that is, it indicates that the current location of the terminal device is outside the coverage of the first cell, the terminal device may not send the wake-up signal. The receive power of the first information is related to a power and a direction for sending the first information by the second access network device. It can be learned that the terminal device sends the wake-up signal to the first access network device based on the information about the first cell only when the receive power of the first information is greater than or equal to the receive power threshold, so that the wake-up signal is not sent to a cell that is outside the coverage of the first cell, and an unnecessary wake-up signal is not sent, thereby saving a transmission resource.

After receiving the first information, the terminal device may first determine whether the terminal device has accessed a cell. When determining that the terminal device has accessed a cell, the terminal device may measure signal quality corresponding to the cell. Then, when the signal quality is less than a signal quality threshold, that is, it indicates that quality of communication between the terminal device and the cell is poor, the terminal device may send the wake-up signal to the first access network device. It can be learned that the terminal device can send the wake-up signal to the first access network device only when the signal quality between the terminal device and the current cell is less than the signal quality threshold, instead of sending the wake-up signal immediately when the first information is received, so that an unnecessary wake-up signal is not sent, and a quantity of transmitted wake-up signals can be reduced, thereby saving a transmission resource.

For example, in a multi-carrier scenario, the terminal device currently performs communication by using the second cell or another DCC cell in a range of the second cell. When there are a large quantity of accessed terminal devices, a small quantity of resources is allocated to the terminal device, and consequently, quality of communication is poor. Therefore, after receiving the first information, the terminal device may first measure signal quality corresponding to the second cell or the another DCC cell. When the signal quality is less than the signal quality threshold, it indicates that quality of communication between the terminal device and the second cell or the another DCC cell is poor. The terminal device may send the wake-up signal to the first access network device based on the information about the first cell, to wake up the first cell, so that the terminal device can be handed over to the first cell.

When the signal quality that is obtained by the terminal device through measurement and that is between the currently accessed cell and the terminal device is less than the signal quality threshold, the terminal device may further first determine whether there is another cell that is not in the sleep state at the current location. When determining that there is another cell that is not in the sleep state at the current location, the terminal device may measure signal quality corresponding to the another cell that is not in the sleep state. Then, when the signal quality is less than the signal quality threshold, that is, it indicates that quality of communication between the terminal device and the another cell that is not in the sleep state is poor, the terminal device may send the wake-up signal to the first access network device. When determining that there is no another cell that is not in the sleep state at the current location, the terminal device may directly send the wake-up signal to the first access network device. It can be learned that, when there is the another cell that is not in the sleep state at the current location, the terminal device sends the wake-up signal only when the measured signal quality between the another cell that is not in the sleep state and the terminal device is less than the signal quality threshold, so that a quantity of transmitted wake-up signals can be reduced, thereby saving a transmission resource. For example, in a multi-carrier scenario, signal quality of a BCC cell currently accessed by the terminal device is poor, and there is a DCC cell that is not in the sleep state at the current location. Therefore, the terminal device may first measure signal quality corresponding to the DCC cell. When the signal quality is less than the signal quality threshold, it indicates that quality of communication between the terminal device and the DCC cell is poor, and the terminal device may send the wake-up signal to the first access network device.

In a multi-carrier scenario, when the first information includes the indication information, the terminal device may determine a cell type of the second cell based on the indication information. For example, the indication information may be transmitted by using one bit. When a value of the indication information is "1", it indicates that the current cell is a BCC cell. When the value of the indication information is "0", it indicates that the current cell is a DCC cell. When determining that the second cell is a BCC cell, the terminal device may further extract information that is about another DCC cell and that is included in an SSB, SI, and other information that are broadcast by the second cell. When determining that the second cell is a DCC cell, the terminal device may learn that an SSB, SI, and other information broadcast by the DCC cell do not include information about another cell, and may not continue to extract the information about the another cell.

When there are a plurality of sleep cells, the second access network device may further send second information to the terminal device, and the terminal device may further receive the second information from the second access network device via the second cell. The second information is similar to the first information, and details are not described herein again. After receiving the first information and the second information, the terminal device may learn that there are two sleep cells near the current location, and may first compare the receive power of the first information and a receive power of the second information. When the terminal device determines that the receive power of the first information is greater than the receive power of the second information, it indicates that quality of communication between the terminal device and the first cell is higher than quality of communication between the terminal device and a third cell, and the terminal device may obtain a more stable and better communication service by using the first cell. Therefore, the terminal device may send the wake-up signal to the first access network device. The third cell corresponds to a third access network device. The receive power of the first information is related to a distance between the first access network device and the terminal device. A shorter distance between the terminal device and the first access network device indicates a higher receive power of the first information. The receive power of the second information is similar. It can be learned that, when the terminal device receives a plurality of pieces of information, that is, when there are two or more cells near the current location of the terminal device, the terminal device may send the wake-up signal to only an access network device corresponding to information with a highest receive power, to wake up a cell with highest signal quality, so as to ensure communication quality of the terminal device. In addition, a quantity of transmitted information can be reduced, thereby saving a transmission resource.

When the first information further includes the channel number and the bandwidth of the first cell, and the second information further includes a channel number and a bandwidth of the third cell, the terminal device may first determine a center frequency of the first cell based on the channel number of the first cell, and determine a center frequency of the third cell based on the channel number of the third cell. Then, the terminal device may determine interference in the first cell based on the center frequency of the first cell and a system bandwidth, and determine interference in the third cell based on the center frequency of the third cell and the bandwidth. Then, the interference in the first cell may be compared with the interference in the third cell. When the interference in the first cell is lower than the interference in the third cell, it indicates that a bit error rate of the first cell is less than a bit error rate of the third cell, and the wake-up signal may be sent to the first access network device. It can be learned that, when there are two or more cells in the sleep state near the current location of the terminal device, the terminal device may send the wake-up signal to an access network device corresponding to a cell with lowest interference in the two or more cells, to ensure good communication service quality. In addition, a quantity of transmitted wake-up signals can be reduced, thereby saving a transmission resource.

When the first information further includes the priority of the first cell, and the second information further includes a priority of the third cell, the terminal device may first compare the priority of the first cell with the priority of the third cell. When the priority of the first cell is higher than the priority of the third cell, it indicates that the first cell may be preferentially woken up, and the terminal device may send the wake-up signal to the first access network device. It can be learned that, when there are two or more cells in the sleep state near the current location of the terminal device, the wake-up signal needs to be sent to only an access network device corresponding to a cell with a highest priority, so that a quantity of transmitted wake-up signals can be reduced, thereby saving a transmission resource.

503: The first access network device wakes up the first cell based on the wake-up signal.

After receiving the wake-up signal from the terminal device, the first access network device may wake up the first cell based on the wake-up signal, and then the terminal device may camp on the first cell or access the first cell. The time-frequency resource used by the first access network device to receive the wake-up signal may be a determined time-frequency resource, and is the same as a time-frequency resource sent by the terminal device. Therefore, the first access network device does not need to constantly receive the wake-up signal in all frequency bands, so that power consumption of the first access network device can be reduced. In addition, when the first access network device is in the sleep state, the first access network device may receive the wake-up signal on only the specific time-frequency resource, and does not need to send any information. Therefore, the baseband and radio frequency processing module that has high power consumption and that is of the first access network device may be disabled. The first access network device may receive the wake-up signal by using one simple receiver module. The receiver module may be dedicated to receiving the wake-up signal. This type of receiver has a simple structure and low power consumption. It can be learned that the first access network device may disable the baseband and radio frequency processing module with high power consumption and receive the wake-up signal by using a low-power-consumption receiving module with a simple structure, so that the power consumption of the first access network device can be further reduced. In addition, because the access network device communicates with the terminal device through a Uu interface, and a transmission rate of the Uu interface is high, a wake-up delay of the first cell can be reduced, so that the terminal device can quickly access the sleep cell.

When the wake-up signal of the first cell is the specific preamble, after receiving the wake-up signal from the terminal device, the first access network device may first determine whether the wake-up signal is a preamble corresponding to the first cell. When determining that the wake-up signal is the corresponding preamble for waking up the first cell, it indicates that the wake-up signal from the terminal device is a wake-up signal sent to the first access network device, and the wake-up signal is for waking up the first cell. Therefore, the first access network device may wake up the first cell, so that the terminal device can camp on the first cell or access the first cell.

When the wake-up signal of the first cell is the pseudo-random sequence generated based on the feature parameter of the first cell, after receiving the wake-up signal from the terminal device, the first access network device may first determine whether the wake-up signal is generated based on the feature parameter of the first cell. When determining that the wake-up signal is generated based on the feature parameter of the first cell, it indicates that the wake-up signal is sent to the first access network device to wake up the first cell, and the first access network device may wake up the first cell, so that the terminal device can camp on the first cell or access the first cell. For example, when the wake-up signal is an m sequence, the quantity of levels of the m sequence is 3, that is, there are three shift registers, tap positions are 1 and 3, and an initial value of the shift register is 001, a finally obtained m sequence may be 1001110, that is, the wake-up signal for the first cell is 1001110. After receiving the m sequence, the first access network device may determine that the wake-up signal is generated based on the feature parameter of the first cell. Therefore, the first access network device may determine that the wake-up signal is a wake-up signal sent to the first access network device to wake up the first cell, and the first access network device may wake up the first cell. It can be learned that the first access network device wakes up the first cell only when determining that the wake-up signal is generated based on the feature parameter of the first cell, so that a quantity of times for which the first cell is woken up can be reduced, thereby reducing the power consumption of the first access network device.

When the terminal device generates the wake-up signal based on the identifier of the first cell or the other information that can identify the first cell, after receiving the wake-up signal from the terminal device, the first access network device may first determine whether the wake-up signal is generated based on the identifier of the first cell or the other information that can identify the first cell. When determining that the wake-up signal is generated based on the identifier of the first cell or the other information that can identify the first cell, it indicates that the wake-up signal is sent to the first access network device to wake up the first cell, and the first access network device may wake up the first cell, so that the terminal device can camp on the first cell or access the first cell. Similarly, when the wake-up signal generated by the terminal device includes or carries the information about the first cell, the first access network device may perform similar processing, to determine that the wake-up signal is a wake-up signal that is sent to the first access network device and that is for waking up the first cell.

In conclusion, the first access network device wakes up the first cell only when determining that the wake-up signal from the terminal device is sent to the first access network device to wake up the first cell, so that the quantity of times for which the first cell is woken up can be reduced, thereby reducing the power consumption of the first access network device.

The first access network device may wake up the first cell based on the wake-up signal when a receive power of the wake-up signal is greater than or equal to a first threshold, and/or load of the second cell is greater than or equal to a second threshold. In one case, after receiving the wake-up signal sent by the terminal device, the first access network device may first determine whether the receive power of the wake-up signal is greater than or equal to the first threshold. When determining that the receive power of the wake-up signal is greater than or equal to the first threshold, it indicates that the terminal device is in the coverage of the first cell, and the first cell may be woken up, so that the terminal device can camp on or access the first cell. In another case, after receiving the wake-up signal sent by the terminal device, the first access network device may temporarily cancel the sleep state, and obtain load information of the second cell by using the second access network device. Then, the first access network device may first determine whether the load of the second cell is greater than or equal to the second threshold. When determining that the load of the second cell is greater than or equal to the second threshold, it indicates that the load of the second cell reaches an upper limit and the second cell cannot serve the terminal device. Therefore, the first access network device may wake up the first cell, so that the terminal device can camp on or access the first cell. When the first access network device determines that the load of the second cell is less than the second threshold, it indicates that the second cell can serve the terminal device. Therefore, the first access network device continues to enter the sleep state.

When the first access network device determines that the receive power of the wake-up signal is greater than or equal to the first threshold, it is possible that the load of the second cell does not reach the upper limit, and the second cell may serve the terminal device. In this case, it is meaningless to wake up the first cell. Similarly, when the first access network device determines that the load of the second cell is greater than or equal to the second threshold, the terminal device may not be in the coverage of the first cell, and it is also meaningless to wake up the first cell. Therefore, in another case, after receiving the wake-up signal sent by the terminal device, the first access network device may first determine whether the receive power of the wake-up signal is greater than or equal to the first threshold and whether the load of the second cell is greater than or equal to the second threshold. When determining that the receive power of the wake-up signal is greater than or equal to the first threshold and the load of the second cell is greater than or equal to the second threshold, it indicates that the terminal device is in the coverage of the first cell, and the load of the second cell reaches the upper limit. Therefore, the first access network device may wake up the first cell, so that the terminal device camps on or accesses the first cell.

It can be learned that the first access network device wakes up the first cell only when determining that the receive power of the wake-up signal is greater than or equal to the first threshold and/or the load of the second cell is greater than or equal to the second threshold, so that the quantity of times for which the first cell is woken up can be reduced, thereby reducing average power consumption.

It should be understood that, when the first access network device and the second access network device are a same access network device, the steps performed by the first access network device may be performed by the second access network device.

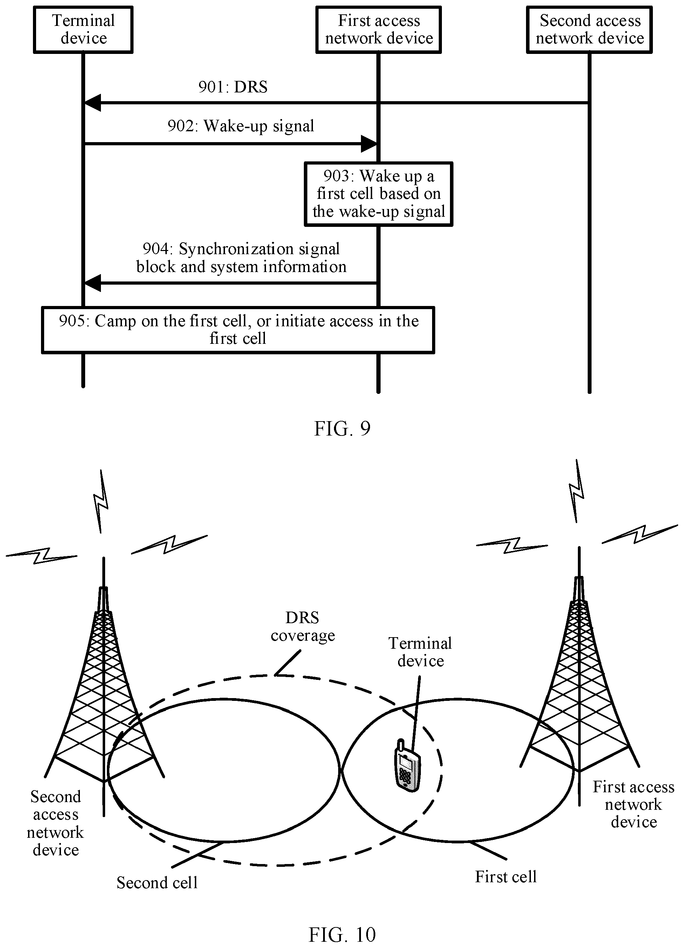

Based on the foregoing network architectures, FIG. 9 is a schematic flowchart of another communication method according to an embodiment of the present invention. The communication method is a communication method for a single-carrier scenario. As shown in FIG. 9, the communication method may include the following steps.

901: A second access network device obtains first information, and sends, to a terminal device via a second cell, a DRS including the first information.

Correspondingly, the terminal device receives, from the second access network device via the second cell, the DRS including the first information.

For detailed descriptions of step 901, refer to related descriptions of step 501.

FIG. 10 is a schematic diagram of a DRS scenario according to an embodiment of the present invention. As shown in FIG. 10, when the terminal device is located in an overlapping area between coverage of a first cell and coverage of the DRS, the terminal device may receive the DRS broadcast by the second access network device by using the second cell. Therefore, the terminal device may send a wake-up signal to a first access network device based on the DRS, and the first access network device may wake up the first cell based on the wake-up signal, so that the terminal device can camp on the first cell or initiate access in the first cell. It should be understood that the schematic diagram of the DRS scenario shown in FIG. 10 is merely an example for description, and constitutes no limitation on the DRS scenario. For example, in the coverage of the DRS, there may be another cell that is disabled or not disabled in an area outside the coverage of the first cell and coverage of the second cell. For another example, in both the coverage of the first cell and an area outside the coverage of the DRS, there may be a DRS broadcast by an access network device corresponding to another neighboring cell of the first cell.

902: The terminal device sends the wake-up signal to the first access network device based on information about the first cell.

Correspondingly, the first access network device may receive the wake-up signal from the terminal device.

For detailed descriptions of step 902, refer to step 502.

903: The first access network device wakes up the first cell based on the wake-up signal.

For detailed descriptions of step 903, refer to step 503.

904: The first cell broadcasts a synchronization signal block and system information.

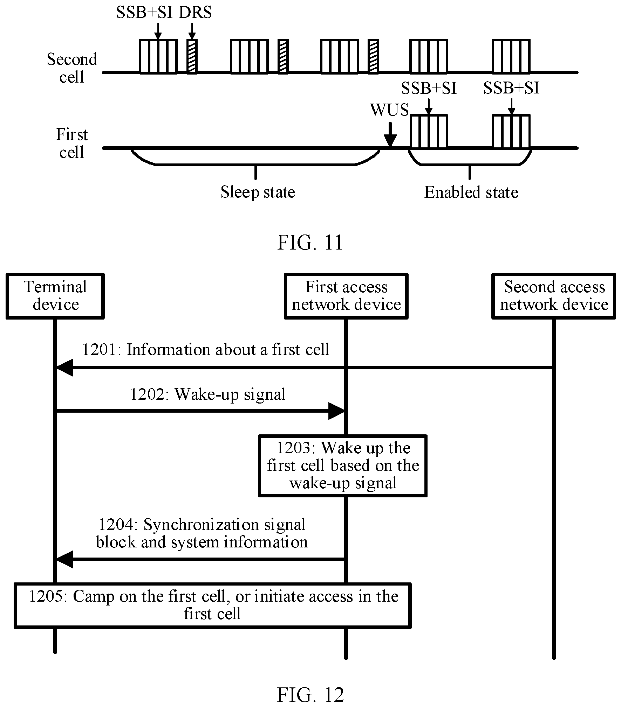

After waking up the first cell, the first access network device may start to broadcast the synchronization signal block and the system information via the first cell. Correspondingly, the terminal device may receive the synchronization signal block and the system information from the first access network device. FIG. 11 is a schematic diagram of cell broadcast according to an embodiment of the present invention. As shown in FIG. 11, when the second cell is not in the sleep state, the second cell broadcasts an SSB and SI of the second cell and the DRS associated with the first cell. The terminal device may receive the DRS that is of the first cell and that is broadcast by the second cell, and then may send the wake-up signal to the first access network device based on the DRS of the first cell, to wake up the first cell. After the first cell is woken up, the first cell broadcasts an SSB and SI of the first cell, to provide a communication service for the terminal device. In addition, the first access network device may send a notification message to the second access network device, to notify the second access network device that the first cell has been woken up. Then, the second access network device may stop broadcasting the DRS associated with the first cell.

905: The terminal device camps on the first cell, or initiates access in the first cell.

After receiving the synchronization signal block and the system information that are broadcast by the first access network device via the first cell, the terminal device may camp on the first cell based on the synchronization signal block and the system information, or may initiate random access in the first cell.

Based on the foregoing network architecture, FIG. 12 is a schematic flowchart of still another communication method according to an embodiment of the present invention. The communication method is a communication method for a multi-carrier scenario. As shown in FIG. 12, the communication method may include the following steps.

1201: A second access network device obtains first information, and sends, to a terminal device via a second cell, the first information that includes information about a first cell.

Correspondingly, the terminal device may receive, from the second access network device via the second cell, the first information that includes the information about the first cell.

For detailed descriptions of obtaining the first information by the second access network device, refer to related descriptions below step 501. After obtaining the first information, the second access network device may send the first information to the terminal device by using system information of the second cell. For example, the first information is included in an SIB1 broadcast by the second cell.

1202: The terminal device sends a wake-up signal to a first access network device based on the information about the first cell.

Correspondingly, the first access network device may receive the wake-up signal from the terminal device.

For detailed descriptions of step 1202, refer to step 502.

1203: The first access network device wakes up the first cell based on the wake-up signal.

For detailed descriptions of step 1203, refer to step 503.

1204: The first cell broadcasts a synchronization signal block and system information.

After waking up the first cell, the first access network device may start to broadcast the synchronization signal block and the system information via the first cell. Correspondingly, the terminal device may receive the synchronization signal block and the system information from the first access network device.

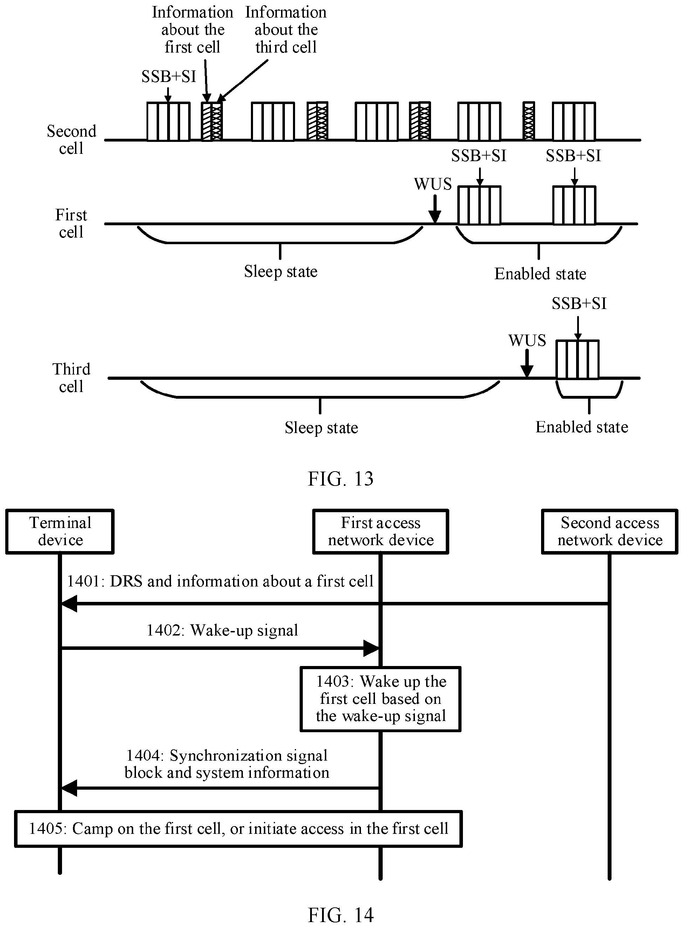

FIG. 13 is a schematic diagram of other cell broadcast according to an embodiment of the present invention. As shown in FIG. 13, when the second cell is not in the sleep state, the second cell broadcasts an SSB and SI of the second cell and the information about the first cell. The terminal device may receive the information that is about the first cell and that is broadcast by the second cell, and then send the wake-up signal to the first access network device based on the information about the first cell, to wake up the first cell. After the first cell is woken up, the first cell broadcasts an SSB and SI of the first cell, to provide a communication service for the terminal device. In addition, the first access network device may send a notification message, to notify the second access network device that the first cell has been woken up. Then, the second access network device may stop broadcasting the information about the first cell. Similarly, after a third cell is woken up, an access network device corresponding to the third cell may also send a notification message to the first access network device, and then the first access network device stops broadcasting information about the third cell.

1205: The terminal device camps on the first cell, or initiates access in the first cell.

After receiving the synchronization signal block and the system information that are broadcast by the first access network device via the first cell, the terminal device may camp on the first cell based on the synchronization signal block and the system information, or initiate random access in the first cell.

Based on the foregoing network architecture, FIG. 14 is a schematic flowchart of still another communication method according to an embodiment of the present invention. The communication method is a communication method for a multi-carrier scenario. As shown in FIG. 14, the communication method may include the following steps.

1401: A second access network device obtains first information, and sends a DRS and information about a first cell to a terminal device via a second cell.

Correspondingly, the terminal device receives, from the second access network device via the second cell, the DRS of the first cell and the information about the first cell.

The DRS of the first cell and the information about the first cell may include the first information. After obtaining the first information, the second access network device may divide the first information into two parts for sending, where one part may be sent to the terminal device by using system information of the second cell. For example, the first information is included in an SIB1 broadcast by the second cell. The other part may be sent to the terminal device by using the DRS. The two parts of information obtained by dividing the first information may include a part or all of the first information. In other words, the two parts of information obtained through division may be the same or may be different. For example, a part of the first information is included in the SIB1 in the system information broadcast in the second cell, and the other part of the first information is included in the DRS broadcast in the second cell. For another example, a part of the first information is included in the SIB1 in the system information broadcast in the second cell, and all the first information is included in the DRS broadcast in the second cell.

For detailed descriptions of obtaining the first information by the second access network device, refer to related descriptions below step 501.

1402: The terminal device sends a wake-up signal to a first access network device based on the information about the first cell.

Correspondingly, the first access network device may receive the wake-up signal from the terminal device.

For detailed descriptions of step 1402, refer to step 502.

1403: The first access network device wakes up the first cell based on the wake-up signal.

For detailed descriptions of step 1403, refer to step 503.

1404: The first cell broadcasts a synchronization signal block and system information.

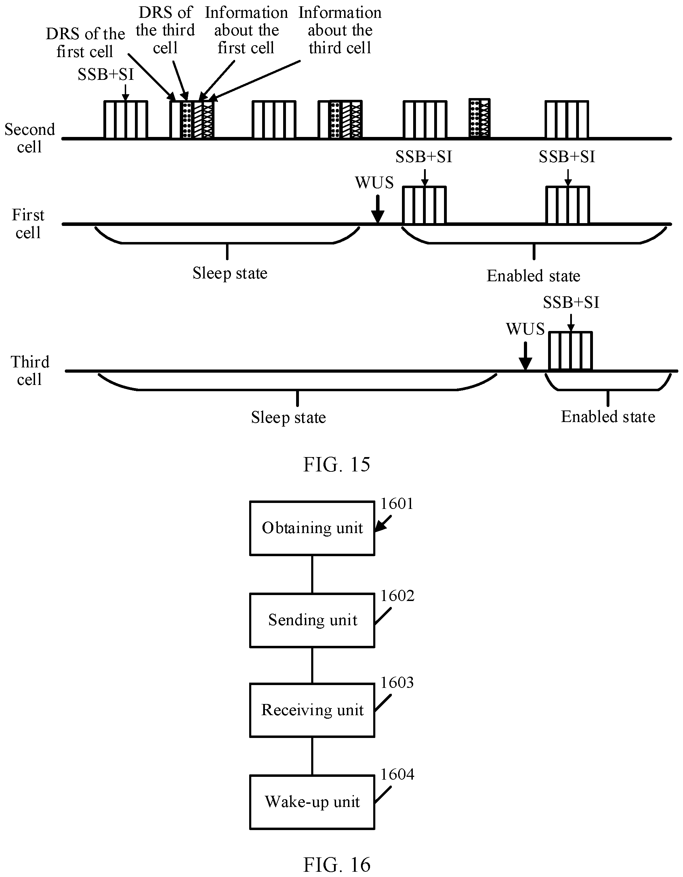

After waking up the first cell, the first access network device may start to broadcast the synchronization signal block and the system information via the first cell. Correspondingly, the terminal device may receive the synchronization signal block and the system information from the first access network device. FIG. 15 is a schematic diagram of still another cell broadcast according to an embodiment of the present invention. As shown in FIG. 15, when the second cell is not in the sleep state, the second cell broadcasts an SSB and SI of the second cell, the DRS, and the information about the first cell. The terminal device may receive the DRS and the information about the first cell that are broadcast by the second cell, and then send the wake-up signal to the first access network device based on the information about the first cell and the DRS, to wake up the first cell. After the first cell is woken up, the first cell broadcasts an SSB and SI of the first cell, to provide a communication service for the terminal device. In addition, the first access network device may send a notification message, to notify the second access network device that the first cell has been woken up. Then, the second access network device may stop broadcasting the information about the first cell and the DRS. Similarly, after a third cell is woken up, an access network device corresponding to the third cell may also send a notification message to the first access network device, and then the first access network device stops broadcasting information about the third cell.

1405: The terminal device camps on the first cell, or initiates access in the first cell.

After receiving the synchronization signal block and the system information that are broadcast by the first access network device via the first cell, the terminal device may camp on the first cell based on the synchronization signal block and the system information, or initiate random access in the first cell.

Based on the foregoing network architecture, FIG. 16 is a schematic diagram of a structure of a communication apparatus according to an embodiment of the present invention. The communication apparatus may be a second access network device, or may be a module in the second access network device. As shown in FIG. 16, the communication apparatus may include:
an obtaining unit 1601, configured to obtain first information, where the first information includes information about a first cell; and
a sending unit 1602, configured to send the first information to a terminal device via a second cell, where the first cell is in a sleep state, the first cell corresponds to a first access network device, the second cell corresponds to a second access network device, and the information about the first cell indicates the terminal device to send a wake-up signal for waking up the first cell.

In an embodiment, the sending unit 1602 is specifically configured to:
determine a first sequence based on the first information; and
send the first sequence to the terminal device via the second cell.

In an embodiment, the first information further includes a receive power threshold. The receive power threshold indicates the terminal device to send the wake-up signal when a receive power of the first information is greater than or equal to the receive power threshold.

In an embodiment, the first information further includes a feature parameter of the first cell, and the feature parameter is for generating the wake-up signal.

In an embodiment, when the first access network device and the second access network device are a same access network device, the communication apparatus may further include:
a receiving unit 1603, configured to receive the wake-up signal from the terminal device; and
a wake-up unit 1604, configured to wake up the first cell based on the wake-up signal.

In an embodiment, the wake-up unit 1604 is specifically configured to: when a receive power of the wake-up signal is greater than or equal to a first threshold, and/or load of the second cell is greater than or equal to a second threshold, wake up the first cell based on the wake-up signal.

In an embodiment, the information about the first cell is resource information, the resource information is for determining a time-frequency resource corresponding to the wake-up signal, and the time-frequency resource corresponds to the first cell.

In an embodiment, the information about the first cell is an identifier of the cell, and the first cell and the second cell are adjacent cells.

In an embodiment, the information about the first cell is an identifier and/or index of the cell, the first cell is a capacity-layer cell, and the second cell is a basic-layer cell.

In an embodiment, the first information further includes indication information, and the indication information indicates a cell type of the second cell.

In an embodiment, the first information further includes resource information, and the resource information is for determining a time-frequency resource corresponding to the wake-up signal.

For more detailed descriptions of the obtaining unit 1601, the sending unit 1602, the receiving unit 1603, and the wake-up unit 1604, directly refer to related descriptions of the second access network device in the method embodiments shown in FIG. 5, FIG. 9, FIG. 12, and FIG. 14, and details are not described herein again.

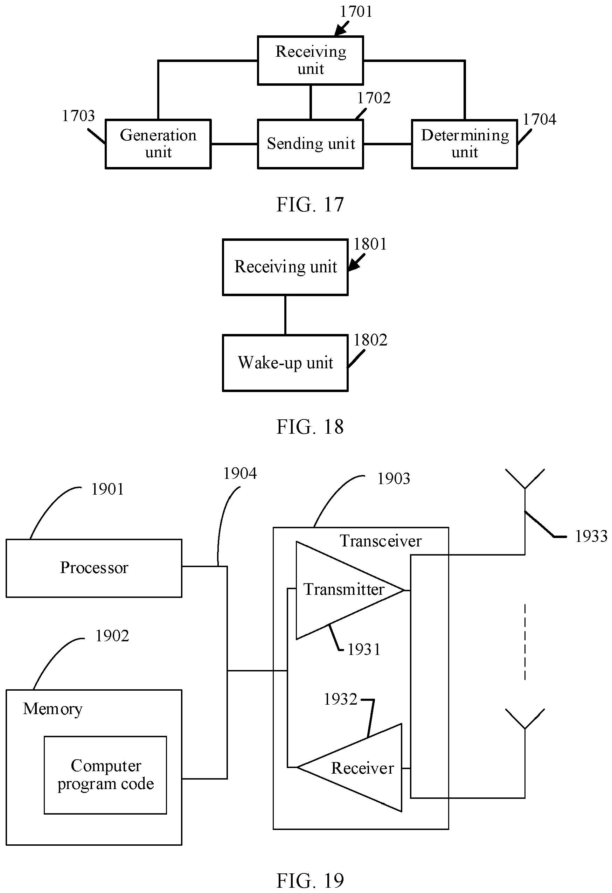

Based on the foregoing network architecture, FIG. 17 is a schematic diagram of a structure of another communication apparatus according to an embodiment of the present invention. The communication apparatus may be a terminal device, or may be a module in the terminal device. As shown in FIG. 17, the communication apparatus may include:
a receiving unit 1701, configured to receive first information via a second cell, where the first information includes information about a first cell, the first cell is in a sleep state, the first cell corresponds to a first access network device, and the second cell corresponds to a second access network device; and
a sending unit 1702, configured to send a wake-up signal to the first access network device based on the information about the first cell, where the wake-up signal is for waking up the first cell.

In an embodiment, the receiving unit 1701 is specifically configured to:
receive a first sequence via the second cell; and
determine the first information based on the first sequence.

In an embodiment, the first information further includes a receive power threshold. That the sending unit 1702 sends a wake-up signal to the first access network device based on the information about the first cell includes:
when a receive power of the first information is greater than or equal to the receive power threshold, sending the wake-up signal to the first access network device based on the information about the first cell.

In an embodiment, the first information further includes a feature parameter of the first cell, and the communication apparatus may further include:
a generation unit 1703, configured to generate the wake-up signal based on the feature parameter.

In an embodiment, the information about the first cell is resource information. That the sending unit 1702 sends a wake-up signal to the first access network device based on the information about the first cell includes:
determining a time-frequency resource based on the resource information, where the time-frequency resource corresponds to the first cell; and
sending the wake-up signal to the first access network device.

In an embodiment, the information about the first cell is an identifier of the cell, and the first cell and the second cell are adjacent cells.

In an embodiment, the information about the first cell is an identifier and/or index of the cell, the first cell is a capacity-layer cell, and the second cell is a basic-layer cell.

In an embodiment, the first information further includes the resource information, and the communication apparatus may further include:
a determining unit 1704, configured to determine the time-frequency resource based on the resource information.

That the sending unit 1702 sends a wake-up signal to the first access network device based on the information about the first cell includes:
sending the wake-up signal to the first access network device based on the information about the first cell by using the time-frequency resource.

In an embodiment, the receiving unit 1701 is further configured to receive second information via the second cell, where the second information includes information about a third cell. That the sending unit sends a wake-up signal to the first access network device based on the information about the first cell includes:
when the receive power of the first information is greater than a receive power of the second information, sending the wake-up signal to the first access network device based on the information about the first cell.

For more detailed descriptions of the receiving unit 1701, the sending unit 1702, the generation unit 1703, and the determining unit 1704, directly refer to related descriptions of the terminal device in the method embodiments shown in FIG. 5, FIG. 9, FIG. 12, and FIG. 14, and details are not described herein again.

Based on the foregoing network architectures, FIG. 18 is a schematic diagram of a structure of still another communication apparatus according to an embodiment of the present invention. The communication apparatus may be a first access network device, or may be a module in the first access network device. As shown in FIG. 18, the communication apparatus may include:
a receiving unit 1801, configured to receive a wake-up signal from a terminal device; and
a wake-up unit 1802, configured to wake up a first cell based on the wake-up signal, where the first cell corresponds to a first access network device, a second cell corresponds to a second access network device, and the wake-up signal is sent based on information that is about the first cell and that is sent by the second access network device via the second cell.

In an embodiment, the wake-up unit 1802 is specifically configured to wake up the first cell based on the wake-up signal when a receive power of the wake-up signal is greater than or equal to a first threshold, and/or load of the second cell is greater than or equal to a second threshold.

For more detailed descriptions of the receiving unit 1801 and the wake-up unit 1802, directly refer to related descriptions of the first access network device in the method embodiments shown in FIG. 5, FIG. 9, FIG. 12, and FIG. 14, and details are not described herein again.

Based on the foregoing network architectures, FIG. 19 is a schematic diagram of a structure of still another communication apparatus according to an embodiment of the present invention. As shown in FIG. 19, the communication apparatus may include a processor 1901, a memory 1902, a transceiver 1903, and a bus 1904. The memory 1902 may exist independently, and may be connected to the processor 1901 through the bus 1904. Alternatively, the memory 1902 may be integrated with the processor 1901. The bus 1904 is configured to implement connection between these components. In one case, as shown in FIG. 19, the transceiver 1903 may include a transmitter 1931, a receiver 1932, and an antenna 1933. In another case, the transceiver 1903 may include a transmitter (that is, an output interface) and a receiver (that is, an input interface). The transmitter may include a transmitter machine and an antenna, and the receiver may include a receiver machine and an antenna.

In an embodiment, the communication apparatus may be a second access network device or a module (for example, a chip) in the second access network device. When computer program instructions stored in the memory 1902 are executed, the processor 1901 is configured to control the sending unit 1602 and the receiving unit 1603 to perform the operations performed in the foregoing embodiment, and the transceiver 1903 is configured to perform the operations performed by the sending unit 1602 and the receiving unit 1603 in the foregoing embodiment. Alternatively, the second access network device or the module in the second access network device may be configured to perform the methods performed by the second access network device in the method embodiments in FIG. 5, FIG. 9, FIG. 12, and FIG. 14, and details are not described again.

In an embodiment, the communication apparatus may be a terminal device or a module (for example, a chip) in the terminal device. When computer program instructions stored in the memory 1902 are executed, the processor 1901 is configured to control the receiving unit 1701 and the sending unit 1702 to perform the operations performed in the foregoing embodiment, and the transceiver 1903 is configured to perform the operations performed by the receiving unit 1701 and the generation unit 1703 in the foregoing embodiment. Alternatively, the terminal device or the module in the terminal device may be configured to perform the methods performed by the terminal device in the method embodiments in FIG. 5, FIG. 9, FIG. 12, and FIG. 14, and details are not described again.

In an embodiment, the communication apparatus may be a first access network device or a module (for example, a chip) in the first access network device. When computer program instructions stored in the memory 1902 are executed, the processor 1901 is configured to control the receiving unit 1801 to perform the operations performed in the foregoing embodiment, and the transceiver 1903 is configured to perform the operations performed by the receiving unit 1801 in the foregoing embodiment. Alternatively, the first access network device or the module in the first access network device may be configured to perform the methods performed by the first access network device in the method embodiments in FIG. 5, FIG. 9, FIG. 12, and FIG. 14, and details are not described herein again.

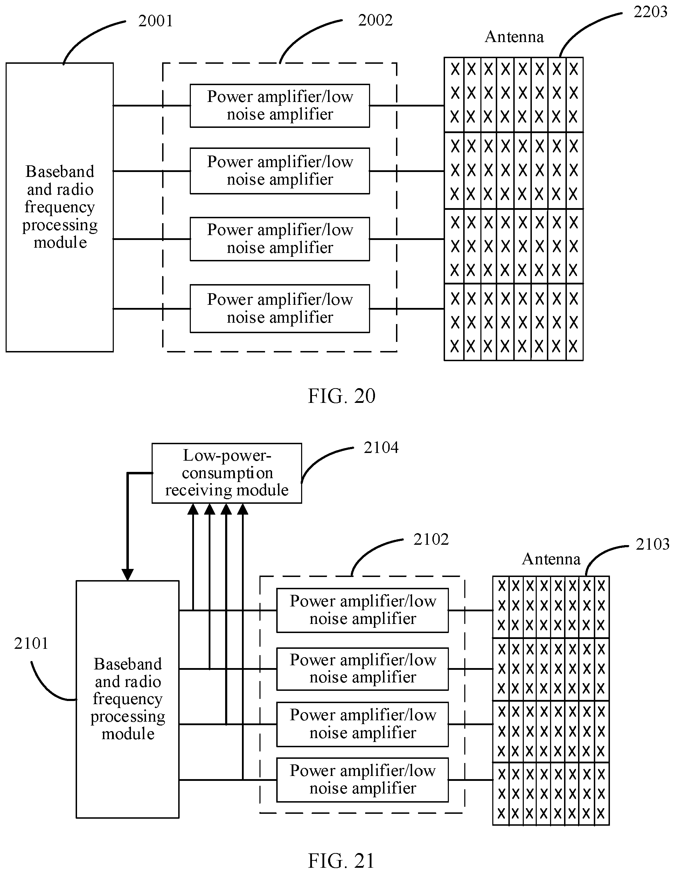

Based on the foregoing network architectures, FIG. 20 is a schematic diagram of a structure of still another communication apparatus according to an embodiment of the present invention. As shown in FIG. 20, the communication apparatus may include a baseband and radio frequency processing module 2001, a power amplifier/low noise amplifier 2002, and an antenna 2003. The baseband and radio frequency processing module 2001 and the power amplifier/low noise amplifier 2002 may be connected by using a line, and the power amplifier/low noise amplifier 2002 and the antenna 2003 may be connected by using a line. The communication apparatus may be a module in an access network device.

In an embodiment, the communication apparatus may be a module in a first access network device or a second access network device.

When the first access network device or the second access network device is not in a sleep state, the first access network device or the second access network device may normally receive a signal and send a signal, and the three function modules are all in an enabled state. To be specific, the baseband and radio frequency processing module 2001, the power amplifier/low noise amplifier 2002, and the antenna 2003 are all in the enabled state, and are configured to receive and send data.

When the first access network device or the second access network device is in the sleep state, the first access network device or the second access network device does not send any signal, and receives only a WUS signal. All the three function modules are also in the enabled state, and are configured to receive the WUS signal sent by a terminal device.

It can be learned that, when the architecture of the communication apparatus is used, when the first access network device or the second access network device is in the sleep state or is not in the sleep state, the baseband and radio frequency processing module 2001, the power amplifier/low noise amplifier 2002, and the antenna 2003 need to be enabled. Therefore, when the first access network device or the second access network device is in the sleep state, power consumption of the access network device cannot be reduced.

When the first access network device or the second access network device is in the sleep state, the first access network device or the second access network device does not need to send any signal, and only receives a wake-up signal. In addition, receiving and processing of the WUS signal are simple, and the baseband and radio frequency processing module with a strong function and high power consumption may not be used for receiving. Therefore, the access network device may disable the baseband and radio frequency processing module 2001 with high power consumption, and then receive the wake-up signal by using a low-power-consumption receiving module, to avoid a case in which the access network device still receives the WUS signal by using the baseband and radio frequency processing module when the access network device is in the sleep state. The low-power-consumption receiving module may be dedicated to receiving the WUS signal, and has a simple structure and low power consumption.

FIG. 21 is a schematic diagram of a structure of still another communication apparatus according to an embodiment of the present invention. As shown in FIG. 21, the communication apparatus may include a baseband and radio frequency processing module 2101, a power amplifier/low noise amplifier 2102, an antenna 2103, and a low-power-consumption receiving module 2104. The baseband and radio frequency processing module 2101 and the low-power-consumption receiving module 2104 may be connected by using a line. The baseband and radio frequency processing module 2101 and the power amplifier/low noise amplifier 2102 may also be connected by using a line. The low-power-consumption receiving module 2104 and the power amplifier/low noise amplifier 2102 may also be connected by using a line. The power amplifier/low noise amplifier 2102 and the antenna 2103 may be connected by using a line. The communication apparatus may be a module in an access network device.

In an embodiment, the communication apparatus may be a module in a first access network device or a second access network device.

When the first access network device or the second access network device is not in a sleep state, the first access network device or the second access network device may normally receive a signal and send a signal. In this case, the low-power-consumption receiving module 2104 may enter the sleep state, that is, the low-power-consumption receiving module 2104 is disabled. The other three functional modules are all in an enabled state. To be specific, the baseband and radio frequency processing module 2101, the power amplifier/low noise amplifier 2102, and the antenna 2103 are all in the enabled state, and are configured to receive and send data.

When the first access network device or the second access network device is in the sleep state, the first access network device or the second access network device does not send any signal, and receives only a WUS signal. In this case, the first access network device or the second access network device may enable the baseband and radio frequency processing module 2101 to enter the sleep state, that is, disable the baseband and radio frequency processing module 2101, so that the other three function modules are all in the enabled state, and are configured to receive the WUS signal. After receiving the WUS signal, the low-power-consumption receiving module may send instructions to the baseband and radio frequency processing module, to enable the baseband and radio frequency processing module, so as to receive and send data.

It can be learned that, when the foregoing architecture of the communication apparatus is used, when the access network device is in the sleep state, the baseband and radio frequency processing module with high power consumption may be disabled, and the wake-up signal is received by using the low-power-consumption receiving module, so that power consumption of the access network device in the sleep state can be reduced.

Alternatively, the module in the first access network device or the second access network device may be configured to perform the methods performed by the first access network device in the method embodiments in FIG. 5, FIG. 9, FIG. 12, and FIG. 14, and details are not described herein again.

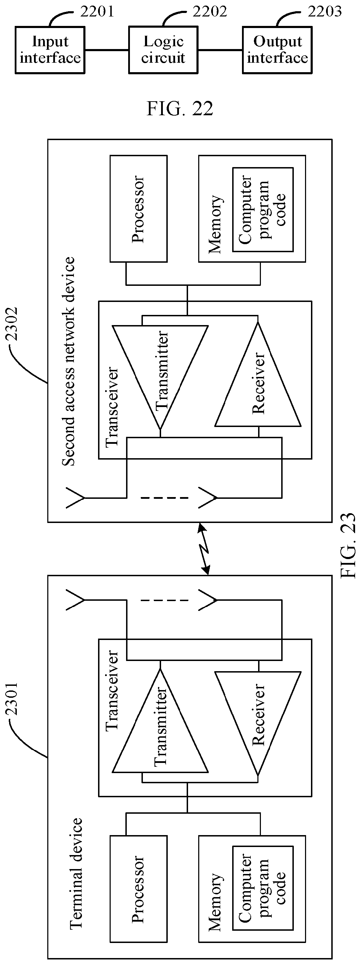

Based on the foregoing network architecture, FIG. 22 is a schematic diagram of a structure of still another communication apparatus according to an embodiment of the present invention. As shown in FIG. 22, the communication apparatus may include an input interface 2201, a logic circuit 2202, and an output interface 2203. The input interface 2201 is connected to the output interface 2203 through the logic circuit 2202. The input interface 2201 is configured to receive information from another communication apparatus, and the output interface 2203 is configured to output, schedule, or send information to the another communication apparatus. The logic circuit 2202 is configured to perform an operation other than the operations of the input interface 2201 and the output interface 2203, for example, implement functions implemented by the baseband and radio frequency processing module 2101 in the foregoing embodiment. The communication apparatus may be a terminal device or a module in the terminal device, or may be a radio access network device or a module in the radio access network device. For more detailed descriptions of the input interface 2201, the logic circuit 2202, and the output interface 2203, directly refer to related descriptions of the terminal device or the access network device in the foregoing method embodiments, and details are not described herein again.

Based on the foregoing network architecture, FIG. 23 is a schematic diagram of a structure of a communication system according to an embodiment of the present invention. As shown in FIG. 23, the communication system may include a terminal device 2301 and a second access network device 2302. For detailed descriptions, refer to the communication methods shown in FIG. 5, FIG. 12, and FIG. 14.

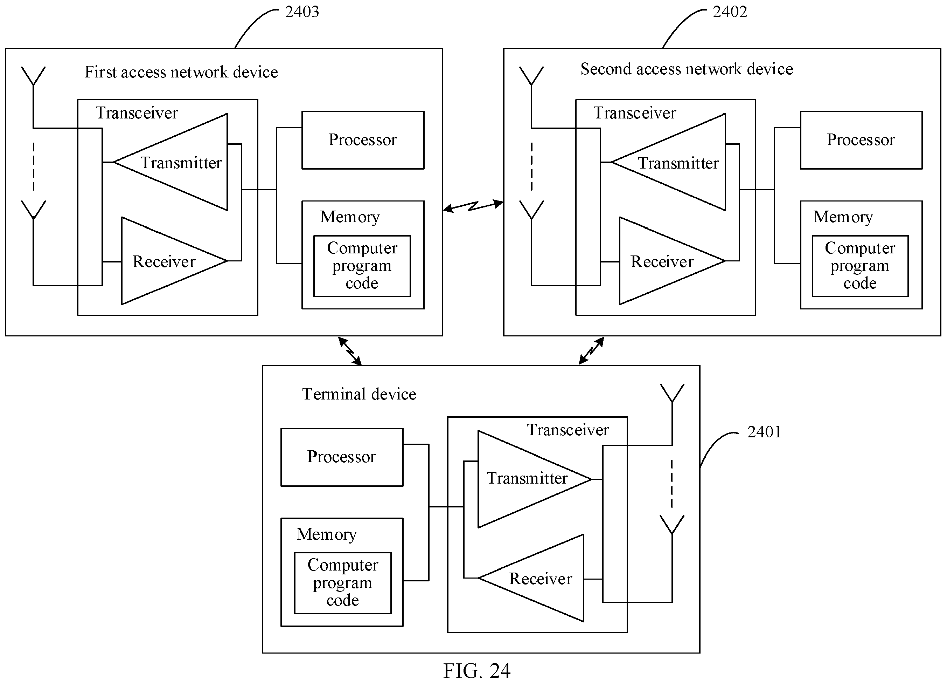

Based on the foregoing network architecture, FIG. 24 is a schematic diagram of a structure of another communication system according to an embodiment of the present invention. As shown in FIG. 24, the communication system may include a terminal device 2401, a second access network device 2402, and a first access network device 2403. For detailed descriptions, refer to the communication methods shown in FIG. 5, FIG. 9, FIG. 12, and FIG. 14.

An embodiment of the present invention further discloses a computer-readable storage medium. The computer-readable storage medium stores instructions, and when the instructions are executed, the method in the foregoing method embodiment is performed.

An embodiment of the present invention further discloses a computer program product including instructions. When the instructions are executed, the method in the foregoing method embodiment is performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, comprising:
obtaining first information, wherein the first information comprises information about a first cell; and
sending the first information to a terminal device via a second cell, wherein the first cell is in a sleep state, the first cell corresponds to a first access network device, the second cell corresponds to a second access network device, and the information about the first cell indicates the terminal device to send a wake-up signal for waking up the first cell.

2. The method according to claim 1, wherein the sending the first information to a terminal device via a second cell comprises:
determining a first sequence based on the first information; and
sending the first sequence to the terminal device via the second cell.

3. The method according to claim 1 or 2, wherein the first information further comprises a receive power threshold, and the receive power threshold indicates the terminal device to send the wake-up signal when a receive power of the first information is greater than or equal to the receive power threshold.

4. The method according to any one of claims 1 to 3, wherein the first information further comprises a feature parameter of the first cell, and the feature parameter is for generating the wake-up signal.

5. The method according to any one of claims 1 to 4, wherein when the first access network device and the second access network device are a same access network device, the method further comprises:
receiving the wake-up signal from the terminal device; and
waking up the first cell based on the wake-up signal.

6. The method according to claim 5, wherein the waking up the first cell based on the wake-up signal comprises:
waking up the first cell based on the wake-up signal when a receive power of the wake-up signal is greater than or equal to a first threshold, and/or load of the second cell is greater than or equal to a second threshold.

7. The method according to any one of claims 1 to 6, wherein the information about the first cell is resource information, the resource information is for determining a time-frequency resource corresponding to the wake-up signal, and the time-frequency resource corresponds to the first cell.

8. The method according to any one of claims 1 to 4, wherein the information about the first cell is an identifier of the cell, and the first cell and the second cell are adjacent cells.

9. The method according to any one of claims 1 to 6, wherein the information about the first cell is an identifier and/or index of the cell, the first cell is a capacity-layer cell, and the second cell is a basic-layer cell.

10. The method according to claim 8 or 9, wherein the first information further comprises resource information, and the resource information is for determining a time-frequency resource corresponding to the wake-up signal.

11. A communication method, comprising:
receiving first information via a second cell, wherein the first information comprises information about a first cell, the first cell is in a sleep state, the first cell corresponds to a first access network device, and the second cell corresponds to a second access network device; and
sending a wake-up signal to the first access network device based on the information about the first cell, wherein the wake-up signal is for waking up the first cell.

12. The method according to claim 11, wherein the receiving first information via a second cell comprises:
receiving a first sequence via the second cell; and
determining the first information based on the first sequence.

13. The method according to claim 11 or 12, wherein the first information further comprises a receive power threshold, and the sending a wake-up signal to the first access network device based on the information about the first cell comprises:
when a receive power of the first information is greater than or equal to the receive power threshold, sending the wake-up signal to the first access network device based on the information about the first cell.

14. The method according to any one of claims 11 to 13, wherein the first information further comprises a feature parameter of the first cell, and the method further comprises:
generating the wake-up signal based on the feature parameter.

15. The method according to any one of claims 11 to 14, wherein the information about the first cell is resource information, and the sending a wake-up signal to the first access network device based on the information about the first cell comprises:
determining a time-frequency resource based on the resource information, wherein the time-frequency resource corresponds to the first cell; and
sending the wake-up signal to the first access network device by using the time-frequency resource.

16. The method according to any one of claims 11 to 15, wherein the information about the first cell is an identifier of the cell, and the first cell and the second cell are adjacent cells.

17. The method according to any one of claims 11 to 15, wherein the information about the first cell is an identifier and/or index of the cell, the first cell is a capacity-layer cell, and the second cell is a basic-layer cell.

18. The method according to claim 16 or 17, wherein the first information further comprises the resource information, and the method further comprises:
determining the time-frequency resource based on the resource information; and
the sending a wake-up signal to the first access network device based on the information about the first cell comprises:
sending the wake-up signal to the first access network device based on the information about the first cell by using the time-frequency resource.

19. The method according to any one of claims 11 to 18, wherein the method further comprises:
receiving second information via the second cell, wherein the second information comprises information about a third cell; and
the sending a wake-up signal to the first access network device based on the information about the first cell comprises:
when the receive power of the first information is greater than a receive power of the second information, sending the wake-up signal to the first access network device based on the information about the first cell.

20. A communication method, comprising:
receiving a wake-up signal from a terminal device; and
waking up a first cell based on the wake-up signal, wherein the first cell corresponds to a first access network device, a second cell corresponds to a second access network device, and the wake-up signal is sent based on information that is about the first cell and that is sent by the second access network device via the second cell.

21. The method according to claim 20, wherein the waking up a first cell based on the wake-up signal comprises:
waking up the first cell based on the wake-up signal when a receive power of the wake-up signal is greater than or equal to a first threshold, and/or load of the second cell is greater than or equal to a second threshold.

22. A communication apparatus, comprising:
an obtaining unit, configured to obtain first information, wherein the first information comprises information about a first cell; and
a sending unit, configured to send the first information to a terminal device via a second cell, wherein the first cell is in a sleep state, the first cell corresponds to a first access network device, the second cell corresponds to a second access network device, and the information about the first cell indicates the terminal device to send a wake-up signal for waking up the first cell.

23. A communication apparatus, comprising:
a receiving unit, configured to receive first information via a second cell, wherein the first information comprises information about a first cell, the first cell is in a sleep state, the first cell corresponds to a first access network device, and the second cell corresponds to a second access network device; and
a sending unit, configured to send a wake-up signal to the first access network device based on the information about the first cell, wherein the wake-up signal is for waking up the first cell.

24. A communication apparatus, comprising:
a receiving unit, configured to receive a wake-up signal from a terminal device; and
a wake-up unit, configured to wake up a first cell based on the wake-up signal, wherein the first cell corresponds to a first access network device, a second cell corresponds to a second access network device, and the wake-up signal is sent based on information that is about the first cell and that is sent by the second access network device via the second cell.

25. A communication apparatus, comprising a processor, a memory, and a transceiver, wherein the transceiver is configured to receive information from a communication apparatus other than the communication apparatus, and output information to the communication apparatus other than the communication apparatus, and the processor invokes a computer program stored in the memory to implement the method according to any one of claims 1 to 10.

26. A communication apparatus, comprising a processor, a memory, and a transceiver, wherein the transceiver is configured to receive information from a communication apparatus other than the communication apparatus, and output information to the communication apparatus other than the communication apparatus, and the processor invokes a computer program stored in the memory to implement the method according to any one of claims 11 to 19.

27. A communication apparatus, comprising a processor, a memory, and a transceiver, wherein the transceiver is configured to receive information from a communication apparatus other than the communication apparatus, and output information to the communication apparatus other than the communication apparatus, and the processor invokes a computer program stored in the memory to implement the method according to either of claims 20 and 21.

28. A communication system, comprising:
the apparatus according to claim 25 and the apparatus according to claim 26, or the apparatus according to claim 25, the apparatus according to claim 26, and the apparatus according to claim 27.

29. A computer-readable storage medium, wherein the computer-readable storage medium stores a computer program or computer instructions, and when the computer program or the computer instructions are run, the method according to any one of claims 1 to 21 is implemented.

30. A computer program product, wherein the computer program product comprises computer program code, and when the computer program code is run, the method according to any one of claims 1 to 21 is implemented.
